# EUROPÄISCHE PATENTSCHRIFT

(11) **EP 3 921 585 B1**
(45) Veröffentlichungstag und Bekanntmachung des Hinweises auf die Patenterteilung: **03.07.2024**
(21) Anmeldenummer: 20706116.9
(22) Anmeldetag: 06.02.2020
(51) Int. Cl.: F26B 5/12, D04H 1/492, D04H 3/11, D06B 15/04, F26B 13/10, F26B 13/16

(54) **TROCKNUNGSEINRICHTUNG UND TROCKNUNGSVERFAHREN FÜR EINE TEXTILE WARENBAHN**
DEVICE AND METHOD FOR DRYING A TEXTILE WEB
DISPOSITIF ET PROCÉDÉ DE SÉCHAGE D'UNE BANDE TEXTILE

(30) Priorität: 08.02.2019 DE 202019100745 U
(43) Veröffentlichungstag der Anmeldung: 15.12.2021
(73) Patentinhaber: AUTEFA Solutions Germany GmbH, 86316 Friedberg (DE)
(72) Erfinder: Niklaus, Michael, 8472 Seuzach (CH); Richter, Christian, 86152 Augsburg (DE)
(74) Vertreter: ERNICKE Patent- und Rechtsanwälte PartmbB
(86) Internationale Anmeldenummer: PCT/EP2020/052982
(87) Internationale Veröffentlichungsnummer: WO 2020/161234

(56) Entgegenhaltungen:
- EP-A2- 0 853 156
- WO-A1-2016/146662
- DE-A1- 19 519 551
- FR-A1- 3 061 916
- US-A- 3 879 858

## Beschreibung

Die Erfindung betrifft eine Trocknungseinrichtung und ein Trocknungsverfahren mit den Merkmalen im Oberbegriff der selbstständigen Ansprüche.

Eine solche Trocknungseinrichtung für eine wasserstrahlverfestigte Warenbahn aus einem Nonwoven-Faservlies ist aus der Praxis bekannt. Die Warenbahn wird in einer Trocknungskammer mit einer rotierenden Trommel transportiert und von einer Belüftungseinrichtung mit beheizter Luft getrocknet. Die Trocknungskammer ist dabei als Ofenkammer ausgebildet.

Aus der Praxis ist es ferner bekannt, einem solchen Ofen eine weitere Einrichtung nachzuschalten, in der die aus dem Ofen ausgetretene Warenbahn nachträglich mit unter hohem Druck emittierten Heißdampfstrahlen beaufschlagt und fertig getrocknet wird.

Es ist Aufgabe der vorliegenden Erfindung, eine verbesserte Trocknungstechnik, insbesondere mit Verbesserung bei dem Bauaufwand sowie der Energie- und Ressourcenbilanz, aufzuzeigen.

Die Erfindung löst diese Aufgabe mit den Merkmalen im Hauptanspruch.

Die beanspruchte Trocknungstechnik, d.h. die Trocknungseinrichtung und das Trocknungsverfahren, haben verschiedene Vorteile.

Die Absaugeinrichtung ist zusätzlich zu der Belüftungseinrichtung der Trocknungseinrichtung angeordnet und saugt mit einem Saugstrom in der Warenbahn enthaltene Flüssigkeit, insbesondere Wasser ab. Die

Flüssigkeitspartikel werden durch den Unterdruck oder Saugdruck und durch die Strömungsenergie des Saugstroms mechanisch von der Warenbahn gelöst und mitgerissen. Diese mechanische Trocknung findet zusätzlich zu der thermischen Trocknung der Belüftungseinrichtung statt. Die Flüssigkeit wird mit dem Saugstrom an einer oder mehreren Beaufschlagungsstellen oder Absaugstellen an der Warenbahn lokal abgesaugt. Die abgesaugte Flüssigkeit wird anschließend im Saugstrom abgeführt.

Die Warenbahn ist aus einem textilen Fasermaterial gebildet. Die Fasern können Kunst- oder Naturfasern oder ein Fasergemisch sein. Die Warenbahn kann von in einer Wirrlage zusammenhängenden textilen Fasern gebildet werden. Die Warenbahn kann z.B. ein Nonwoven-Faservlies sein. Die der Trocknungseinrichtung zugeführte Warenbahn kann zuvor verfestigt sein, z.B. durch Flüssigkeitsstrahlen, insbesondere durch Wasserstrahlen oder andere Fluidstrahlen. Hierzu zählen auch Gasstrahlen. Die Warenbahn ist z.B. als flächige Bahn ausgestaltet. Sie kann einlagig oder mehrlagig sein. Sie kann eine gewisse Labilität, insbesondere Zugeempfindlichkeit, aufweisen. Ein Fördermittel und dessen Stützfunktion können für den sicheren und belastungsarmen Transport der Warenbahn vorteilhaft sein.

Die Warenbahn befindet sich bei der Absaugung der Flüssigkeit in Anlage an dem fluiddurchlässigen Fördermittel, von dem sie auch durch die Trocknungskammer transportiert wird. Dies ist aus verschiedenen Gründen von Vorteil. Zum einen wird Platz und Bauaufwand gespart. Andererseits ist es nicht erforderlich, die mechanisch entfeuchtete Warenbahn an ein weiteres Fördermittel zu übergeben. Die thermische Trocknung kann im Umfeld der mechanischen Trocknung, insbesondere im unmittelbaren Anschluss an die mechanische Trocknung stattfinden. Die mechanische Trocknung und die thermische Trocknung der Warenbahn können vorteilhaferweise am gleichen Fördermittel erfolgen.

Zudem besteht die Möglichkeit, die mechanische Trocknung innerhalb und/oder außerhalb der beheizten Trocknungskammer mit einem entsprechend temperierten Gas durchzuführen. Die mechanische Trocknung kann auch an mehreren, ggf. entlang der Bewegungsbahn verteilten und beabstandeten Orten bzw. Absaugstellen erfolgen. Die thermische Trocknung und die mechanische Trocknung können ferner mehrmals abwechselnd, z.B. periodisch, stattfinden.

Durch die Absaugung findet eine zusätzliche und effiziente Entfeuchtung, insbesondere Entwässerung, der Warenbahn statt. Durch die Absaugung können z.B. ca. 30 % des Flüssigkeitsgehalts in der Warenbahn entfernt werden. Die Warenbahn kann insgesamt schneller und besser getrocknet werden. Der Energieeinsatz für die thermische Trocknung der Warenbahn kann reduziert werden.

Der mit der abgesaugten Flüssigkeit beladene Saugstrom kann regeneriert werden. Wärme und Flüssigkeit, insbesondere Wasser, können rückgewonnen und verwertet werden. Die beanspruchte Trocknungstechnik kann dadurch eine besonders gute Energie- und Ressourcenbilanz haben.

Die lokale Absaugung an einer Absaugstelle kann durch ein am Fördermittel angeordnetes Absaugelement, insbesondere einen hohlen Saugdüsenbalken, erfolgen. Das Absaugelement, insbesondere der hohle Saugdüsenbalken, kann eine zur Warenbahn gerichtete und verengte, z.B. schlitzartige, Düsenöffnung aufweisen, mit der eine starke Saugströmung lokal an der Warenbahn erzeugt werden kann.

Die Absaugeinrichtung kann darüber hinaus einen mit dem Absaugelement verbundenen Unterdruckerzeuger, z.B. eine Luftpumpe, für die Generierung des Saugstroms und einen mit dem Absaugelement verbundenen Abscheider, z.B. einen Fliehkraftabscheider oder Zyklon, für die Flüssigkeitsabscheidung aus dem Saugstrom aufweisen. Die Strömungsenergie des Saugstroms kann vorteilhaft zum Abscheiden benutzt werden, insbesondere in einer Drehströmung bzw. Wirbelströmung in einem Fliehkraft- oder Zyklonabscheider.

Die Absaugeinrichtung kann ferner einen Wärmetauscher, z.B. für den Saugstrom und/oder den vom Unterdruckerzeuger abgegebenen und entfeuchteten Gasstrom, und ggf. weitere Komponenten aufweisen. Mit dem Wärmetauscher kann z.B. ein Frischgas vorgewärmt werden, welches der Trocknungseinrichtung und deren Belüftungseinrichtung zugeführt wird.

Der Unterdruckerzeuger, der Abscheider und der Wärmetauscher können einzeln oder mehrfach vorhanden sein. Sie können außerhalb der Trocknungskammer angeordnet sein. Sie können einen Mehrfachnutzen haben und können auch für andere Zwecke eingesetzt werden, z.B. für eine Flüssigkeitsstrahlverfestigungseinrichtung.

Die Absaugeinrichtung kann eine Rückführung für den vom Unterdruckerzeuger abgegebenen und entfeuchteten Gasstrom in die Trocknungskammer aufweisen. Hierdurch kann z.B. ein in der Trocknungskammer eingesetzte Trocknungsgas in einem Kreislauf geführt und regenerativ genutzt werden. Der rückgeführte entfeuchtete Gasstrom kann mit der Abwärme des Unterdruckerzeugers zusätzlich beheizt werden, so dass Wärmeverluste im besagten Kreislauf vermieden oder minimiert werden und der Trocknungskammer ein warmes Gas zurückgeführt werden kann.

Ferner kann die aus dem Saugstrom abgeschiedene Flüssigkeit, insbesondere Wasser, wiederverwendet werden. Die in der Flüssigkeit enthaltene Wärme kann über einen Wärmetauscher genutzt werden, z.B. zur Erwärmung des besagten Frischgases. Andererseits kann die Flüssigkeit einem anderen Verbraucher, z.B. der Flüssigkeitsstrahlverfestigungseinrichtung, zugeführt werden. Hierdurch ist auch ein Kreislauf für die in der Warenbahn enthaltene und abgesaugte Flüssigkeit möglich.

Aus prozesstechnischen Gründen ist es günstig, die ein oder mehreren Absaugstelle(n), insbesondere deren Absaugelement(e), im Bereich eines Einlaufs der Trocknungseinrichtung anzuordnen. Ein oder mehrere Absaugelement(e) kann/können innerhalb der Trocknungskammer und/oder außerhalb der Trocknungskammer an einem externen Bereich des Fördermittels angeordnet sein.

Ein Absaugelement kann sich bei externer Anordnung ebenfalls in unmittelbarer Nähe zum Einlauf der Trocknungseinrichtung befinden. Es kann insbesondere dem Einlauf unmittelbar vorgeschaltet sein.

Ein Absaugelement kann auch im Einlauf angeordnet sein. Es kann dabei für eine Abdichtung des Einlaufs gegen Falschluft von außen dienen.

Das bevorzugt in einer geschlossenen Ringbahn umlaufende Fördermittel für die Warenbahn kann hierfür bereichsweise aus der Förderkammer herausgeführt sein.

Bei einer Anordnung der ein oder mehreren Absaugelemente innerhalb der Trocknungskammer ist ebenfalls eine Positionierung im Anschluss an den Einlauf günstig. Innerhalb der Trocknungskammer kann das vorhandene beheizte Trocknungsgas für die Absaugung und Entwässerung genutzt werden.

Im Bereich des Einlaufs kann dieses beheizte Trocknungsgas in der Trocknungskammer eine relativ niedrige Temperatur bei einer relativ hohen Feuchtigkeit haben. Dies ist einerseits für die vorgenannte verlustarme Rückführung und für die Energiebilanz von Vorteil. Andererseits kann das angesagte feuchte Gas beim Durchströmen des Fördermittels und der Warenbahn kondensieren. Das gebildete Kondensat kann von der Absaugeinrichtung abgesaugt und abgeführt werden. Die Absaugung kann dadurch auch die thermische Trocknungstechnik optimieren.

Das Fördermittel ist fluiddurchlässig. Es führt die Warenbahn durch seine Bewegung mit.

Die Belüftungseinrichtung kann eine Umwälzströmung des beheizten Gases innerhalb der Trocknungskammer erzeugen. Die Umwälzströmung kann quer durch die Warenbahn und das Fördermittel gerichtet sein. Das Fördermittel stützt dabei die Warenbahn gegen den Strömungsdruck ab.

Die Absaugeinrichtung saugt an der jeweiligen Absaugstelle Gas aus der dortigen Umgebung an. Das Gas wird von der Rückseite der Warenbahn durch die Warenbahn und durch das stützende Fördermittel hindurch angesaugt. Je nach Anordnung des oder der Absaugelemente innerhalb oder außerhalb der Trocknungskammer ist das besagte Gas das Trocknungsgas aus der Trocknungskammer oder Umgebungsluft.

Die Absaugeinrichtung kann mit den ein oder mehreren Absaugelementen auskommen. Eine eigene Blaseinrichtung, die eine zusätzliche starke lokale Blasströmung erzeugt, ist entbehrlich.

Bei einer Anordnung der Absaugstelle bzw. des Ansaugelements innerhalb der Trocknungskammer sind der Saugstrom und die Umwälzströmung nebeneinander vorhanden und gleich gerichtet. Der Saugstrom hat dabei eine größere Strömungsgeschwindigkeit als die Umwälzströmung. Auch der Unterdruck im Saugstrom kann wesentlich größer als der Unterdruck in der Umwälzströmung sein. Der Differenzdruck im Saugstrom kann z.B. 450 mbar im Vergleich zu 100 mbar in der Umwälzströmung betragen.

Die Trocknungskammer, die Belüftungseinrichtung und das Fördermittel für die laufende Warenbahn können in unterschiedlicher Weise ausgebildet sein.

In der bevorzugt wärmeisolierten Trocknungskammer wird eine Atmosphäre des Trocknungsgases gebildet. Diese kann hinsichtlich ihrer Temperatur und ihres Feuchtegehalts gesteuert, vorzugsweise geregelt, sein.

Die Trocknungskammer kann in mehrere, ggf. durch Schotte zumindest bereichsweise voneinander getrennte Kammerbereiche unterteilt sein. Die Warenbahn und zumindest ein Teilbereich des Fördermittels durchlaufen die Trocknungskammer und werden hier in der beheizten und vorzugsweise hinsichtlich Temperatur und Feuchte geregelte Umwälzströmung beaufschlagt. In den Kammerbereichen können jeweils eigene Umwälzströmungen generiert werden. Diese können jeweils eigenständig in ihrer Temperatur und im Feuchtegehalt gesteuert, bevorzugt geregelt, werden. Die einzelne, z.B. horizontale Schotte oder alle Schotte können entfallen. Die Bildung und Unterteilung der Kammerbereiche kann mittels der mehreren und voneinander getrennten Umwälzströmungen erfolgen.

Die Anordnung von einem oder mehreren Absaugelementen in einem oder mehreren ggf. abgeschotteten Kammerbereichen ist besonders vorteilhaft. Die dort bestehende Gasatmosphäre kann optimal genutzt werden. Besonders günstig ist eine Anordnung an dem zum Einlauf benachbarten Kammerbereich.

Innerhalb der Trocknungskammer kann eine Austausch- oder Gegenströmung des Trocknungsgases entlang der bevorzugt in einer Schleife geführten Warenbahn vorhanden sein. Die Gegenströmung kann gegen die Laufrichtung der Warenbahn gerichtet sein. Die Gegenströmung kann von einer bevorzugt am Auslauf angeordneten Gaszufuhr für Frischgas, insbesondere Frischluft, zu einer am Auslauf angeordneten Gasabfuhr gerichtet sein. Mit der Gegenströmung kann ein Gas- und Feuchteaustausch stattfinden. Am Einlauf ist die Gastemperatur niedriger und der Feuchtegehalt höher als am Auslauf.

Am Einlauf und/oder Auslauf können sich Einrichtungen zur Abdichtung gegen den Durchtritt von Falschluft von außen und gegen den Austritt von Trocknungsgas nach außen befinden.

Die Trocknungstechnik, insbesondere die Trocknungseinrichtung, kann folgende Ausgestaltungen haben, die einzeln oder in Kombination nutzbar sind.

Die Trocknungseinrichtung kann eine hinsichtlich Temperatur und Feuchte gesteuerte oder geregelte Gas-Atmosphäre in der Trocknungskammer aufweisen.

Die Trocknungskammer kann mehrere, insbesondere zwei, Kammerbereiche mit einer aufrechten Ausrichtung oder Anordnung aufweisen, die nebeneinander angeordnet sind. Die Kammerbereiche können insbesondere in einer bevorzugt regelmäßigen Matrix angeordnet sein.

Ein oder mehrere Absaugelement(e) können außerhalb der Trocknungskammer an einem externen Bereich des besagten Fördermittels angeordnet sein. Mit dem Fördermittel wird die Warenbahn für die thermische Trocknung innerhalb der Trocknungskammer transportiert.

Ein oder mehrere Absaugelement(e) können innerhalb der Trocknungskammer angeordnet sein.

Ein oder mehrere Absaugelement(e) können teilweise innerhalb und teilweise außerhalb der Trocknungskammer, insbesondere im Einlauf, angeordnet sein.

Die besagten Anordnungsmöglichkeiten für ein oder mehrere Absaugelement(e) können einzeln oder in beliebiger Kombination vorhanden sein. Entsprechendes gilt für die ein oder mehreren Absaugstellen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Faserbehandlungsanlage mit einer Trocknungseinrichtung und einer zugeordneten Absaugeinrichtung,
- Figur 2:: eine abgebrochene und vergrößerte Detaildarstellung der Absaugeinrichtung an einer Absaugstelle gemäß Figur 1,
- Figur 3:: eine Variante der Trocknungseinrichtung und der Absaugeinrichtung an einer Absaugstelle gemäß Figur 2,
- Figur 4 bis 8:: Varianten der Faserbehandlungsanlage, der Trocknungseinrichtung und der Absaugeinrichtung von Figur 1,
- Figur 9 bis 12:: eine Trocknungseinrichtung mit einer Absaugeinrichtung in verschiedenen und teilweise geschnittenen Ansichten und
- Figur 13:: eine Variante der Faserbehandlungsanlage von Figur 1 mit einer anderen Trocknungseinrichtung und Absaugeinrichtung.

Die Erfindung betrifft eine Trocknungseinrichtung (2) mit einer Absaugeinrichtung (5) sowie ein Trocknungsverfahren und ein Absaugverfahren. Die Erfindung befasst sich ferner mit einer Faserbehandlungsanlage (1) sowie einem zugehörigen Verfahren, welche eine solche Trocknungseinrichtung (2) mit einer Absaugeinrichtung (5) aufweist.

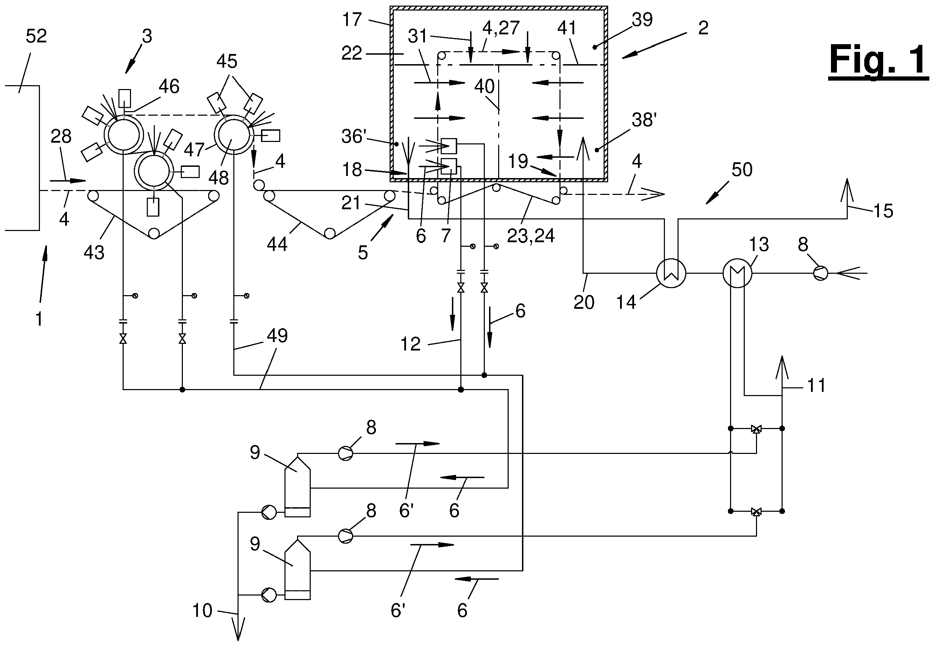

Figur 1 bis 8 und Figur 13 zeigen in schematischer Darstellung eine solche Faserbehandlungsanlage (1). Sie weist eine Trocknungseinrichtung (2) mit einer Absaugeinrichtung (5) auf. Die Faserbehandlungsanlage (1) kann zusätzliche Komponenten beinhalten, z.B. eine Flüssigkeitsstrahlverfestigungseinrichtung (3), insbesondere Wasserstrahlverfestigungseinrichtung, sowie einen Florerzeuger (52), z.B. eine Karde, eine Airlay oder dgl., und ggf. weitere Komponenten. Diese können z.B. ein Vliesleger und/oder eine Weiterbehandlungseinrichtung, insbesondere eine Schneidvorrichtung und/oder Wickelvorrichtung sein. Sie sind der Übersicht halber nicht dargestellt.

Die Trocknungseinrichtung (2) dient zur Trocknung einer in Pfeilrichtung bzw. Laufrichtung (28) laufenden feuchten bzw. nassen Warenbahn (4). Diese wurde z.B. zuvor in der Flüssigkeitsstrahlverfestigungseinrichtung (3) mit Flüssigkeitsstrahlen (46) vernadelt bzw. verfestigt und dabei angefeuchtet. Die Flüssigkeitsstrahlen (46) sind z.B. Wasserstrahlen. Sie können alternativ aus einer anderen Flüssigkeit bestehen. Die nachstehend näher beschriebene Flüssigkeitsverfestigungseinrichtung (3) ist der Trocknungseinrichtung (2) in Laufrichtung der Warenbahn (4) vorgeschaltet. Die Feuchte bzw. Nässe kann auch auf andere Weise in die zu trocknende Warenbahn (4) eingebracht werden.

Die Warenbahn (4) besteht aus einem textilen Fasermaterial. Dies kann z.B. ein Nonwoven-Faservlies sein. Die bevorzugt kurz geschnittenen Fasern können Kunst- oder Naturfasern oder ein Fasergemisch sein. Die Warenbahn (4) kann einlagig oder mehrlagig ausgebildet sein.

Der in Laufrichtung (28) der Warenbahn (4) vorgeschaltete Florerzeuger (52) kann z.B. einen einzelnen Faserflor oder eine Mehrzahl von Faserfloren erzeugen, welche direkt die Warenbahn (4) bilden. Sie können alternativ in einem dem Florerzeuger (52) nachgeschalteten Vliesleger, insbesondere einem Kreuzleger, zu einem mehrlagigen Vlies gelegt werden, welches dann die Warenbahn (4) bildet.

Die Trocknungseinrichtung (2) weist eine Trocknungskammer (22) mit einer Belüftungseinrichtung (29) und mit einem Einlauf (18) sowie einem Auslauf (19) für die Warenbahn (4) auf. Ferner beinhaltet die Trocknungseinrichtung (2) ein fluiddurchlässiges, z.B. gelochtes oder gitterartiges, Fördermittel (23) für die laufende Warenbahn (4). Das Fördermittel (23) kann gemeinsam mit der Warenbahn (4) durch den Einlauf (18) in die Trocknungskammer (22) eintreten und durch den Auslauf (19) wieder austreten.

Die Warenbahn (4) wird innerhalb der Trocknungskammer (22) mit dem Fördermittel (23) transportiert und mit einem beheizten Gas getrocknet. Das Gas oder Trocknungsgas ist vorteilhafterweise Luft, kann alternativ aber auch von einem anderen Prozessgas gebildet werden. Die Trocknungskammer (22) ist z.B. in einem wärmegedämmten Gehäuse (17) angeordnet. Der Einlauf (18) und der Auslauf (19) können gegen einen unerwünschten Gas- oder Luftdurchtritt abgedichtet sein.

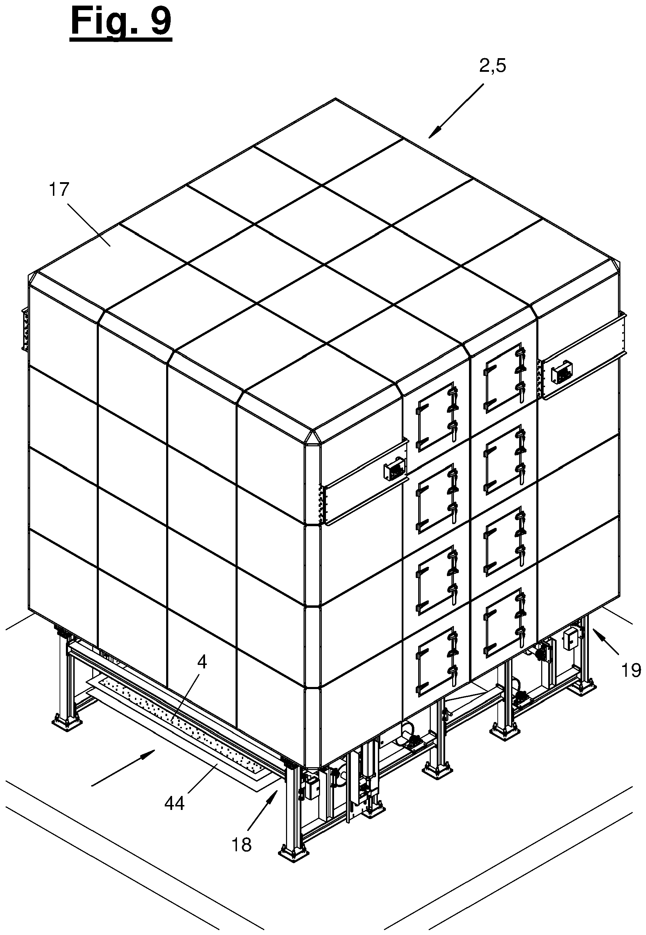

Die Trocknungseinrichtung (2) weist zusätzlich eine Absaugeinrichtung (5) auf, welche in der Warenbahn (4) enthaltene Flüssigkeit, z.B. Wasser mit einem Saugstrom (6) an einer oder mehreren Absaugstellen (53) in der Warenbahn (4) lokal absaugt und abführt. Die Trocknungseinrichtung (2) kann in unterschiedlicher Weise konstruktiv und funktional ausgebildet sein. Figur 1 und 2, 3, 9 bis 12 und 13 zeigen unterschiedliche Ausführungsformen.

Die Absaugeinrichtung (5) weist mindestens ein am Fördermittel (23) angeordnetes Absaugelement (7) auf. Die Absaugeinrichtung (5) saugt an der jeweiligen Beaufschlagungsstelle (53) oder Absaugstelle Gas aus deren Umgebung von der Rückseite der Warenbahn (4) an und saugt es durch die Warenbahn (4) und durch das Fördermittel (23) hindurch. Das fluiddurchlässige Fördermittel (23) kann die Warenbahn (4) gegen den Anpressdruck des Saugstroms (6) abstützen.

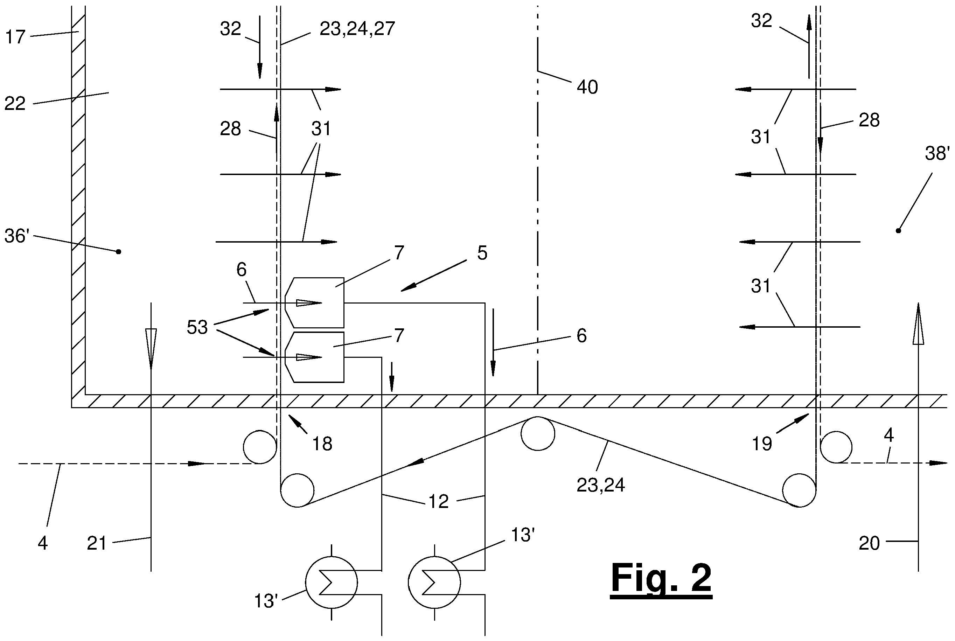

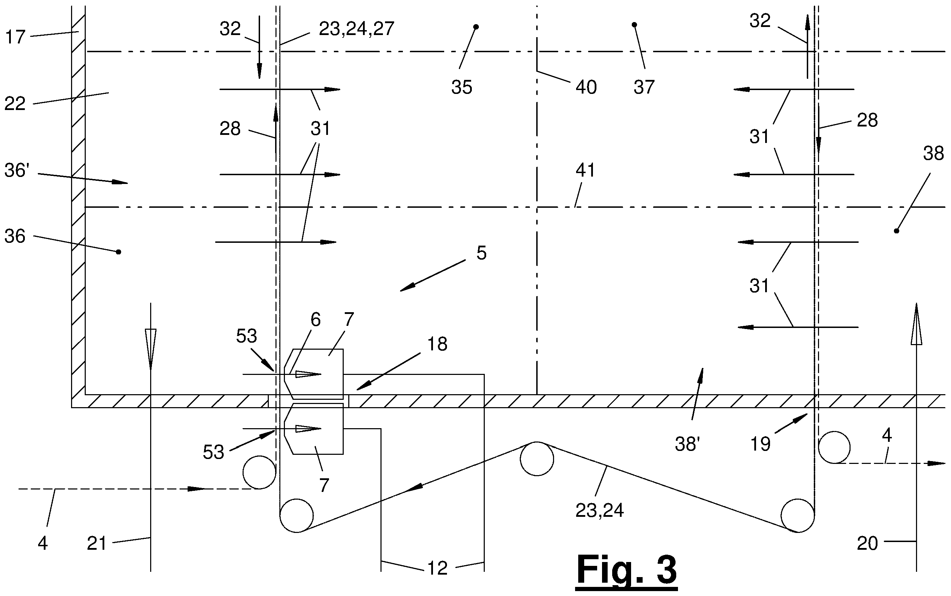

Das Absaugelement (7) kann z.B. als hohler Saugdüsenbalken ausgebildet sein. Dieser kann an der der Warenbahn (4) zugewandten Seite eine verengte und z.B. schlitzartige Düsenöffnung aufweist. Das Absaugelement (7), insbesondere seine Düsenöffnung, befindet ist in unmittelbarer Nähe am Fördermittel (23) und an der Warenbahn (4) sowie der dortigen Absaugstelle (53). Durch den im hohlen Absaugelement (7), insbesondere im Saugdüsenbalken, gebildeten hohen Unterdruck und das durch die Warenbahn (4) eingesaugte Gas kann ein auf die Warenbahn (4) an der Absaugstelle (53) einwirkender starker Saugstrom (6) erzeugt werden. Figur 2 und 3 verdeutlichen diese Anordnung.

Der am Absaugelement (7), insbesondere an der Düsenöffnung, bestehende Unterdruck wirkt auch auf die Flüssigkeitspartikel an der Absaugstelle (53) in der Warenbahn (4) und saugt sie an. Der Saugstrom (6) löst ebenfalls Flüssigkeitspartikel aus der Warenbahn (4) an der Absaugstelle (53) und nimmt sie mit.

Die Absaugeinrichtung (5) kann ferner einen mit dem Absaugelement (7) verbundenen Unterdruckerzeuger (8) für die Generierung des Unterdrucks und des Saugstroms (6) aufweisen. Der Unterdruckerzeuger (8) kann z.B. als Gaspumpe oder in anderer geeigneter Weise ausgebildet sein. Der Unterdruckerzeuger (8), insbesondere die Gaspumpe, kann an seiner Ansaugseite einen hohen Unterdruck von z.B. -0,2 bis -0,5 bar erzeugen. Auf der Abgabeseite oder Ausblasseite kann der Druck wesentlich kleiner sein und z.B. bei ca. 0,01 bar liegen.

Ferner kann die Absaugeinrichtung (5) einen mit dem Absaugelement (7) verbundenen Abscheider (9) zum Abscheiden der Flüssigkeit aus dem feuchten Saugstrom (6) aufweisen. Der Abscheider (9) kann z.B. als Fliehkraftabscheider, insbesondere als Zyklon, oder in anderer Weise ausgebildet sein. Der Abscheider (9) hat einen Eingang für den feuchten Saugstrom(6) und getrennte Ausgänge für die abgeschiedene Flüssigkeit und den entfeuchteten Saugstrom (6) bzw. Gasstrom.

Der Unterdruckerzeuger (8) kann in Strömungsrichtung des Saugstroms (6) hinter dem Abscheider (9) angeordnet sein. Er kann sich am Ausgangsbereich für den entfeuchteten Saugstrom (6) befinden und kann an den Ausgang des Abscheiders (9) angeschlossen sein. Der Unterdruckerzeuger (8) saugt durch den Abscheider (9) hindurch an seiner Unterdruckseite bzw. Ansaugseite an und erzeugt den Saugstrom (6). An seiner Ausblasseite gibt er das entfeuchtete Gas in einem Gasstrom (6') wieder ab. Der Gasstrom (6') kann mit der Abwärme des Unterdruckerzeugers (8) erwärmt werden.

Alternativ kann in einer nicht dargestellten Abwandlung der Unterdruckerzeuger (8) in Strömungsrichtung des Saugstroms (6) vor dem Abscheider (9) angeordnet sein. Beide können hierfür entsprechend konstruktiv angepasst sein. Die nachfolgend beschriebenen weiteren Gestaltungen der Absaugeinrichtung (5) gelten mit entsprechender Anpassung auch für diese Abwandlung.

Die Absaugeinrichtung (5) kann außerdem einen Wärmetauscher (13,13') aufweisen. Dieser kann für den Saugstrom (6) und/oder für den entfeuchteten und ggf. mit der Abwärme des Unterdruckerzeugers (8) angewärmten Gasstrom (6') vorgesehen und angeordnet sein. Der Ein nicht dargestellter Wärmetauscher kann auch für die abgeschiedene Flüssigkeit genutzt werden. Die Wärmetauscher (13,13') können alternativ oder kombinativ vorhanden sein.

Ein Wärmetauscher (13) für den entfeuchteten und ggf. mit der Abwärme des Unterdruckerzeugers (8) angewärmten Gasstrom (6') ist in Figur 1, 4, 7 und 13 gezeigt und wird nachfolgend beschrieben.

Figur 2 zeigt beispielhaft einen Wärmetauscher (13') für einen Saugstrom (6) in einer Leitung (12). Der Verbraucher für die aus dem Saugstrom (6) entnommene Wärme ist nicht dargestellt. Dieser kann z.B. eine in Figur 1 gezeigte Gaszufuhr (20) für Frischgas bzw. Frischluft der Trocknungskammer (22) sein. Alternativ oder zusätzlich kann die entnommene Wärme anderweitig in der Faserbehandlungsanlage (1) genutzt werden, z.B. in der Flüssigkeitsstrahlverfestigungseinrichtung (3) oder an anderer Stelle.

Die vorgenannten Komponenten (8,9,13,13') der Absaugeinrichtung (5) können jeweils einzeln oder mehrfach vorhanden sein. Sie können für eine Regeneration des Saugstroms (6) genutzt werden.

Die besagten Komponenten (8,9,13,13') der Absaugeinrichtung (5) sind bevorzugt außerhalb der Trocknungskammer (22) angeordnet. Sie sind durch eine oder mehrere Leitungen (12) mit vorzugsweise jeweils einem einzelnen oder einer Mehrzahl von Absaugelementen (7) verbunden. An den Leitungen (12) können Wege- und Absperrventile, Manometer, Drosseln und andere Elemente zur Steuerung des strömenden Mediums angeordnet sein.

Die Absaugeinrichtung (5) kann ferner eine nachfolgend näher erläuterte Rückführung (16) für den entfeuchteten und vom Unterdruckerzeuger (8) emittierten Gasstrom (6') in die Trocknungskammer (22) aufweisen. Die Absaugeinrichtung (5) kann alternativ oder zusätzlich eine Gasabgabe (11), insbesondere eine Luftabgabe, zur Abgabe des emittierten Gasstroms (6') an die Umgebung aufweisen.

Die Absaugeinrichtung (5) kann gemäß Figur 1 bis 8 und 13 in unterschiedlicher Weise ausgebildet sein. Sie kann auch in unterschiedlicher Weise der Trocknungseinrichtung (2) zugeordnet sein.

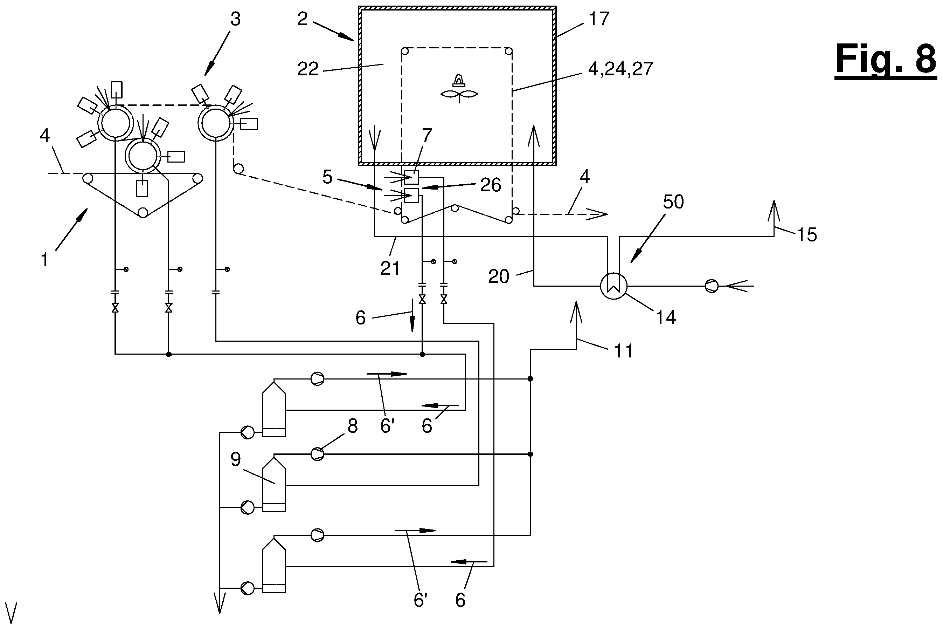

In den Varianten von Figur 1, 2, 4 bis 7 und 13 sind die ein oder mehreren Absaugelemente (7) innerhalb der Trocknungskammer (22) angeordnet. Figur 8 zeigt eine Variante mit einer Anordnung von ein oder mehreren Ansaugelementen (7) außerhalb der Trocknungskammer (14). Es ist außerdem in einer nicht dargestellten Variante möglich, jeweils ein oder mehrere Absaugelemente (7) innerhalb und außerhalb der Trocknungskammer (22) anzuordnen.

In Figur 3 ist eine Variante dargestellt, bei der sich ein oder mehrere Absaugelemente (7) im Einlauf (18) der Trocknungskammer (22) befinden. Sie können dabei auch teilweise innerhalb und außerhalb der Trocknungskammer (22) angeordnet sein.

In den gezeigten Ausführungsbeispielen sind jeweils zwei Absaugelemente (7) vorhanden. Dies ist günstig für die Effizienz der Absaug-Entfeuchtung und für Bauaufwand bzw. den Platzbedarf. Die Zahl der Absaugelemente (7) kann auch größer als zwei, z.B. drei oder vier, sein. Die Absaugeinrichtung kann auch nur ein einzelnes Absaugelement (7) aufweisen.

In allen Varianten sind die ein oder mehreren Absaugelemente (7) am Fördermittel (23) angeordnet, mit dem die Warenbahn (4) in der Trocknungskammer (22) bewegt und geführt wird. Sie befinden sich bevorzugt im Bereich des Einlaufs (18) der Warenbahn (4). Alternativ oder zusätzlich können ein oder mehrere Absaugelemente (7) an anderer Stelle der Trocknungseinrichtung angeordnet sein.

In den Ausführungsformen von Figur 1, 2, 4 bis 7 und 13 sind ein oder mehrere Absaugelemente (7) an einem innerhalb der Trocknungskammer (22) angeordneten Bereich des Fördermittels (23) positioniert. In der Variante von Figur 8 sind ein oder mehrere externe Absaugelemente (7) an einem externen Bereich (26) des Fördermittels (23) angeordnet. Figur 3 zeigt eine Anordnung im Einlauf (18).

Die innerhalb der Trocknungskammer (22) angeordneten Saugelemente (7) von Figur 1, 2, 4 bis 7 und 13 saugen das in der Trocknungskammer (22) befindliche heiße Gas bzw. Trockengas an, welches zusammen mit den angesaugten und mitgerissenen Flüssigkeitspartikeln aus der Warenbahn (4) den Saugstrom (6) bildet.

Bei der Variante von Figur 8 mit der externen Anordnung von ein oder mehreren Absaugelementen (7) wird kühlere Umgebungsluft angesaugt und bildet zusammen mit den angesaugten und mitgerissenen Flüssigkeitspartikeln den Saugstrom (6).

Bei der Variante von Figur 3 befinden sich die z.B. zwei Absaugelemente (7) jeweils bereichsweise im Einlauf (18) und mit ihrem anderen Bereich innerhalb bzw. außerhalb der Trocknungskammer (22). Ihre jeweilige Düsenöffnung ist dabei innerhalb bzw. außerhalb der Trocknungskammer (22) angeordnet. Das obere Absaugelement (7) saugt heißes Gas bzw. Trockengas aus der Trocknungskammer (22) an. Das untere Absaugelement (7) saugt Umgebungsluft an. In einer anderen Ausführungsvariante kann ein Absaugelement (7) mit seiner Düsenöffnung mittig im Einlauf (18) angeordnet sein. Es kann dabei heißes Gas bzw. Trockengas und auch Umgebungsluft ansaugen. Der hierbei erzeugte Saugstrom (6) bildet eine wirksame Strömungssperre und Abdichtung gegen Luftzutritt von der Umgebung in die Trocknungskammer (22) und Gasaustritt aus der Trocknungskammer (22) in die Umgebung.

In Abwandlung der gezeigten Ausführungsformen können in einer Mischform auch interne und externe Absaugelemente (7) mit Anordnung neben dem z.B. anderweitig abgedichteten Einlauf (18) vorhanden sein.

Die im Saugstrom (6) enthaltene Wärme kann zur Beheizung von Frischgas für die Trocknungseinrichtung (2) benutzt werden. Zusätzlich oder alternativ kann die in dem ggf. entfeuchteten abgegebenen Gasstrom (6') enthaltene Wärme der Trocknungskammer (22) wieder zugeführt werden. Der entfeuchtete Gasstrom (6') kann auch mittels einer Gasabgabe (11), insbesondere einer Luftabgabe, an die Umgebung abgegeben werden.

Der Saugstrom (6) kann die an der Absaugstelle (53) bestehende Temperatur haben. Dies kann bei der externen Anordnung von Absaugelementen (7) die Umgebungstemperatur sein. Bei der internen Anordnung von ein oder mehreren Absaugelementen in der Trocknungskammer (22) kann dies die Temperatur des beheizten Gases bzw. Trocknungsgases sein. Die Temperatur des Saugstroms (6) kann außerdem durch die Abwärme des Unterdruckerzeugers (8) auf der Ausblasseite erhöht werden.

In den Ausführungsformen von Figur 1 bis 12 ist das Fördermittel (23) als fluiddurchlässiges und biegeelastisches Förderband (24) ausgebildet. Dieses ist am Einlauf (18) und am Auslauf (19) aus der Trocknungskammer (22) bereichsweise herausgeführt. Der Einlauf (18) und der Auslauf (19) für die Warenbahn (4) und das Förderband (24) befinden sich am unteren Bereich der Trocknungskammer (22), z.B. am Boden der Trocknungskammer (22) bzw. des Gehäuses (17). Die Warenbahn (4) und das Förderband (24) haben am Einlauf (18) und der Auslauf (19) eine aufrechte, insbesondere vertikale, Erstreckung. Der Einlauf (18) und der Auslauf (19) können in den erwähnten Weisen abgedichtet sein.

Die z.B. extern horizontal einlaufende Warenbahn (4) wird mittels einer Umlenkrolle nach oben umgelenkt und mit dem laufenden Förderband (24) außerhalb der Trocknungskammer (22) in Kontakt gebracht sowie von diesem mitgenommen und durch den Einlauf (18) in die Trocknungskammer (22) transportiert.

In Abwandlung der gezeigten Ausführungsformen kann das Förderband (24) auch vollständig innerhalb der Trocknungskammer (22) angeordnet sein.

Das Förderband (24) läuft in allen Ausführungsbeispielen in Laufrichtung (28) der Warenbahn (4) um. Das Förderband (24) führt und stützt die Warenbahn (4) und nimmt sie durch seine Umlaufbewegung mit. Das Förderband (24) ist in einer geschlossenen Ringbahn geführt und wird umlaufend in Laufrichtung (28) angetrieben. Das Förderband (24) kann über eine oder mehrere Umlenkungen (25) geführt und aufgespannt sein. Die Umlenkungen (25) können z.B. von frei drehbaren Umlenkrollen gebildet werden. An einer oder mehreren Umlenkungen (25) kann sich eine Absaugung befinden, welche das Förderband (24) und die Warenbahn mit Saugdruck an der Umlenkung hält.

Innerhalb der Trocknungskammer (22) wird mittels der Umlenkungen (25) eine schleifenförmige, insbesondere U-förmige, Bewegungsbahn (27) für das Förderband (24) und die Warenbahn (4) gebildet. Hierbei sind oberhalb von Einlauf und Auslauf (18,19) Umlenkungen (25) angeordnet, die zur Bildung von geraden Bahnabschnitten der schleifenförmigen Bewegungsbahn (27) dienen. Die Bewegungsbahn (27) kann die gezeigte einzelne und gegenüber dem Einlauf (18) und Auslauf (19) nach oben ausbauchende Schleifenform haben. Alternativ sind mehrere Schleifen möglich.

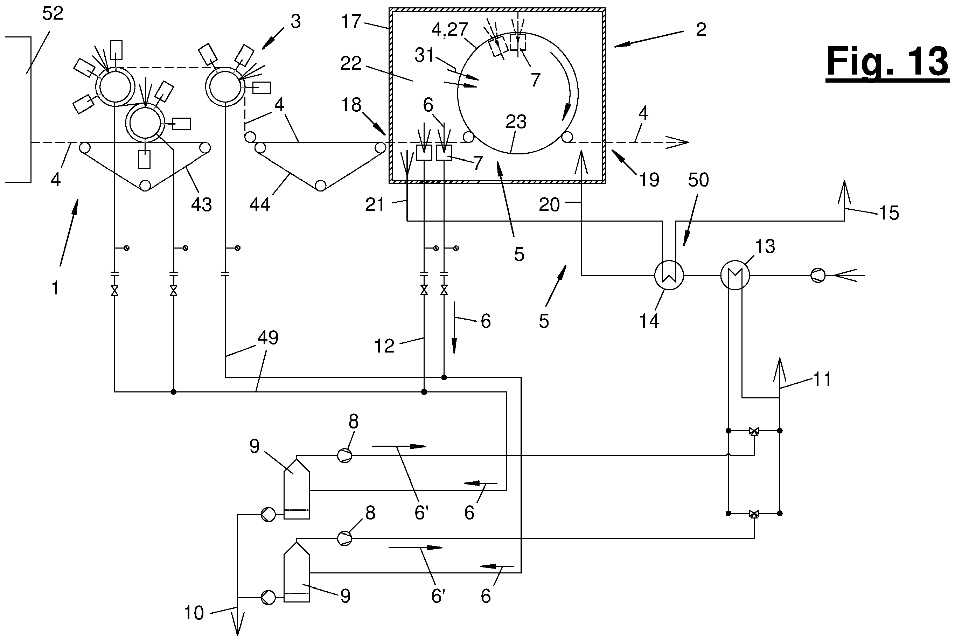

In der Variante von Figur 13 weist das Fördermittel (23) eine fluiddurchlässige und in Pfeilrichtung rotierende Trommel auf, an deren z.B. gelochtem Trommelmantel die Warenbahn (4) in einer kreisförmigen Schleife (27) geführt ist. Dies kann durch direkte Anlage der Warenbahn (4) am Trommelmantel oder durch Zwischenlage eines ebenfalls fluiddurchlässigen Transportbands erfolgen. Bei Figur 13 ist das Fördermittel (23) z.B. vollständig innerhalb der Trocknungskammer (22) angeordnet. Die Trocknungskammer (22) kann in der Ausführung von Figur 13 z.B. als Trockenofen ausgebildet sein.

Die Belüftungseinrichtung (29) erzeugt innerhalb der Trocknungskammer (22) eine Umwälzströmung (31) des beheizten Gases, insbesondere Luft. Die Belüftungseinrichtung (29) kann hierfür ein oder mehrere Gebläse (33) und eine oder mehrere Heizeinrichtungen (30) aufweisen. Die Umwälzströmung (31) ist quer durch die Warenbahn (4) und das Fördermittel (23) gerichtet. Die Umwälzströmung (31) sorgt für eine thermische Trocknung der Warenbahn (4). Die Umwälzströmung (31) hält ferner die Warenbahn (4) in Kontakt mit dem Fördermittel (23). Innerhalb der Trocknungskammer (22) können mehrere und bevorzugt getrennte Umwälzströmungen (31) vorhanden sein.

Bei der Absaugung innerhalb der Trocknungskammer (22) sind der Saugstrom (6) und die Umwälzströmung (31) nebeneinander vorhanden und gleich gerichtet. Neben der der jeweiligen Absaugstelle (53) und dem Saugstrom (6) kann die Umwälzströmung (31) fließen. Diese Ausbildung ist in Figur 2 und 3 dargestellt und kann in allen Varianten von Figur 1 bis 13 vorhanden sein.

Der Saugstrom (6) hat eine größere Strömungsgeschwindigkeit und einen höheren Unterdruck bzw. Differenzdruck als die Umwälzströmung (31). Der Saugstrom (6) ist durch die entsprechende Formgebung des Absaugelements (7) eng gebündelt und hat einen wesentlich kleineren Strömungsquerschnitt und Einwirkbereich an der Warenbahn (4) als die benachbarte Umwälzströmung (31).

Die Saugleistung des Unterdruckerzeugers (8) für den jeweiligen Saugstrom (6) kann wesentlich höher als die Saugleistung der Belüftungseinrichtung (29) für die benachbarte Umwälzströmung (31) sein. Der jeweilige Unterdruckerzeuger (8) kann z.B. einen Differenzdruck von ca. 0,5 bar erzeugen, wobei ein Gebläse (33) der Belüftungseinrichtung (29) einen Differenzdruck von 0,02 bar entwickelt.

Die Trocknungseinrichtung (2) kann eine Gasatmosphäre in der Trocknungskammer (22) aufweisen, die hinsichtlich ihrer Temperatur und bevorzugt auch ihrer Feuchte gesteuert oder geregelt ist. Die Trocknungskammer (22) kann einen einzelnen und einheitlichen Kammerbereich aufweisen, in dem die laufende Warenbahn (4) und das Fördermittel (23) für die Prozessbeaufschlagung mit dem Trockengas aufgenommen sind. In diesem einzelnen Kammerbereich kann eine einheitliche Gas-Atmosphäre bestehen.

Bei der in Figur 1 bis 12 gezeigten Ausführungsform weist die Trocknungseinrichtung (2) eine Trocknungskammer (22) auf, die in mehrere Kammerbereiche (35-39) unterteilt ist. Die Kammerbereiche (35-39) können gegenseitig abgeschottet sein, was aber nicht zwingend notwendig ist.

In den Kammerbereichen (35-39) kann jeweils eine eigene Gas-Atmosphäre bestehen. Diese kann eigenständig hinsichtlich ihrer Temperatur und Feuchte gesteuert oder geregelt sein. In den verschiedenen Kammerbereichen (35-39) können unterschiedliche Gas-Atmosphären mit unterschiedlichen Temperaturen und verschiedenen Feuchtegraden des Gases bzw. Trocknungsgases bestehen.

Eine solche Ausbildung einer Trocknungskammer (22) mit mehreren ggf. voneinander abgeschotteten Kammerbereichen kann auch bei einer abgewandelten Ausführungsform von Figur 13 vorhanden sein. Die Kammerbereiche (35-39) können in den verschiedenen Varianten stationär angeordnet sein.

Figur 1 und 2 zeigen eine Ausführungsform der Trocknungskammer (22) mit zwei seitlich nebeneinander angeordneten Kammerbereichen (36',38') und einem darüber angeordneten Kammerbereich (39). Die nebeneinander angeordneten Kammerbereichen (36',38') können durch ein aufrechtes luftdichtes Schott (40) voneinander getrennt sein. Sie können eine aufrechte, insbesondere vertikale, Ausrichtung haben. Der obere Kammerbereich (39) verbindet die nebeneinander angeordneten Kammerbereichen (36',38'). Er kann liegend, insbesondere horizontal, ausgerichtet sein. Zwischen den Kammerbereichen (36',38') und dem oberen Kammerbereich (39) kann ein liegendes und luftdurchlässiges oder ggf. luftdichtes Schott (41) angeordnet sein. Letzteres kann auch entfallen.

Bei der Ausführungsform von Figur 3 und 9 bis 12 können die Kammerbereiche (35-39) in einer Matrix übereinander und nebeneinander angeordnet sein.

Bei der Variante von Figur 13 mit dem trommelförmigen Fördermittel (23) können die Kammerbereiche als Sektoren mit zumindest bereichsweiser Verteilung über den Umfang des Fördermittels (23) vorhanden sein. Die ein oder mehreren Absaugelemente (7) sind z.B. innerhalb des trommelförmigen Fördermittels (23) in den Kammerbereichen angeordnet. Ein oder mehrere Absaugelemente (7) können auch in einem an den Einlauf (18) anschließenden und z.B. unteren Kammerbereich angeordnet sein. Die Warenbahn (4) kann hier von einem weiteren und nicht dargestellten Fördermittel gestützt und transportiert werden, welches sich innerhalb der Trocknungskammer (22) befindet.

Die ein oder mehreren Kammerbereiche der Trocknungskammer (22) werden von der Warenbahn (4) und dem Fördermittel (23) durchlaufen. Die Warenbahn (4) wird dabei in dem oder den Kammerbereichen (35-39) jeweils einseitig mit dem Gas, insbesondere Luft bzw. von der Umwälzströmung (31), angeströmt und durchströmt. Die Gasströmung ist dabei gegen die Warenbahn (4) gerichtet und strömt zuerst durch die Warenbahn (4) und dann durch das stützende Fördermittel (23). Bei einer in mehrere Kammerbereiche (35-39) unterteilten Trocknungskammer (22) durchlaufen die Warenbahn (4) und das Fördermittel (23) die ggf. abgeschotteten Kammerbereiche (35-39) nacheinander. In den verschiedenen Kammerbereichen (35-39) werden sie jeweils aus der gleichen Richtung mit dem beheizten Gas bzw. Trocknungsgas angeströmt und durchströmt.

Bei der in Figur 3 und 9 bis 12 gezeigten Kammerausbildung sind die mehreren Kammerbereiche (35-38) in einer Kammermatrix mit mehreren Spalten nebeneinander und mit mehreren Reihen übereinander angeordnet. Dies können z.B. zwei aufrechte Spalten sein und drei oder mehr liegende Reihen. Die Trocknungskammer (22) kann an der Oberseite einen zentralen, verbindenden Kammerbereich (39) mit liegender Ausrichtung aufweisen.

Die Warenbahn (4) und das Fördermittel (23), insbesondere das Förderband (24), durchlaufen in den Varianten von Figur 1, 2, 3 und 9 bis 12 jeweils die Kammerbereiche (35-39) etwa in ihrem mittleren Bereich. Die seitlichen Kammerbereiche (36',38') und die in der Matrix angeordneten Kammerbereiche (35-38) werden dabei von der Warenbahn (4) und dem Fördermittel (23) mit einer aufrechten, vorzugsweise vertikalen, Ausrichtung durchlaufen. In dem oberen liegenden Kammerbereich (39) haben sie eine liegende, vorzugsweise horizontale, Ausrichtung. Die Umlenkungen (25) sind entsprechend angeordnet.

Die Kammerbereiche (35-39) sind durch platten- oder wandartige Schotts (40,41) voneinander zumindest bereichsweise getrennt. Zwischen den Spalten der Kammermatrix bzw. zwischen den linken Kammerbereichen (35, 36) und den rechten Kammerbereichen (37,38) ist ein aufrechtes, insbesondere vertikales, und im wesentlichen gasdichtes Schott (40) angeordnet. Zwischen den Reihen der Kammermatrix und den jeweils übereinander angeordneten Kammerbereichen (35,36) bzw. (37,38) sind jeweils Schotts (41) liegend, insbesondere horizontal, angeordnet, die gasdurchlässig sein können. Die Schotts (41) könnten z.B. an den Durchtrittsstellen von Warenbahn (4) und Fördermittel (23) eine Bodenöffnung (42) aufweisen.

Die Variante von Figur 1 und 2 unterscheidet sich von der Variante von Figur 3 und 9 bis 12 mit der Kammermatrix durch den Entfall der liegenden Schotte (41) zwischen den jeweils spaltenweisen Kammerbereichen (35-38) und die Zusammenführung dieser Kammerbereichen (35-38) zu den linken und rechten Kammerbereichen (36',38').

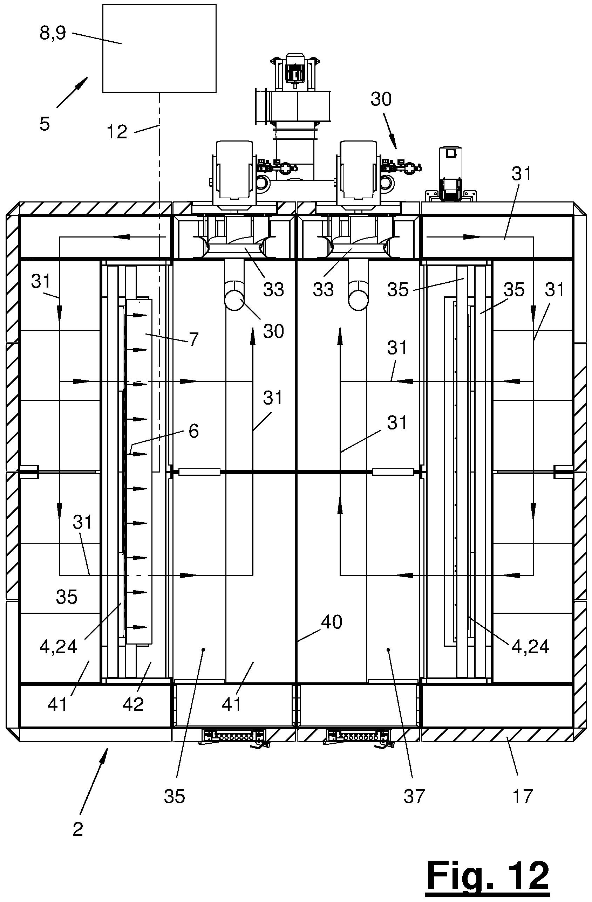

Die Belüftungseinrichtung (29) erzeugt bei den Varianten von Figur 1, 2, 3 und 9 bis 12 in den ggf. abgeschotteten Kammerbereichen (35-39) jeweils eine eigene Umwälzströmung (31). Hierfür kann für jeden Kammerbereich (35-39) ein eigenes Gebläse (33) und eine eigene Heizeinrichtung (30) vorhanden sein. Beim oberen Kammerbereich (39) kann wahlweise ein Gebläse (33) vorhanden sein oder fehlen. Die Gebläse (33) sind z.B. gemäß Figur 12 vorzugsweise an der Rückseite des Gehäuses (17) und an der dortigen Rückwand angeordnet. Sie sind vorzugsweise als Umluftgebläse ausgebildet, welche das im jeweiligen Kammerbereich (35-39) befindliche Behandlungsgas umwälzen und die besagte liegende bzw. horizontale Umwälzströmung (31) erzeugen. Sie saugen z.B. axial an und blasen radial aus. Die Umlenkungen (25) können mit der Saugseite der oberen Gebläse verbunden sein.

Die Umwälzströmungen (31) sind derart ausgerichtet, dass die Unterdruckseite an der Rückseite des Fördermittels (23), insbesondere des Förderbands (24) angeordnet ist. Bei den Kammerbereichen (35-38) ist die Unterdruckseite jeweils an den zum zentralen Schott (40) liegenden Sektor des jeweiligen Kammerbereichs. Die etwa mittig durch die Kammerbereiche (35-39) laufende Warenbahn (4) nebst Fördermittel (23) unterteilen die jeweiligen Kammerbereiche (35-39) in einen Sektor mit Überdruck an der Anströmseite der Warenbahn (4) und einen Sektor mit Unterdruck an der anderen Seite.

Die ein oder mehreren im Unterdrucksektor angeordneten Absaugelemente (7) saugen das Gas aus dem Überdrucksektor mit der dort bestehenden Atmosphäre an. Figur 12 verdeutlicht in einer geschnittenen Draufsicht diese Umwälzströmung (31) und ihren Kreislauf durch die Sektoren der Kammerbereiche.

Eine lokale Druckerhöhung durch an der Absaugstelle (53) jenseits der Warenbahn (4) befindliche Blasbalken oder dgl. ist in den gezeigten Ausführungsbeispielen nicht vorgesehen. Die mechanische Entfeuchtung der Warenbahn (4) erfolgt nur durch lokale Absaugung mit hohem Saug- oder Unterdruck an einer Seite der Warenbahn (4). Dies ist zwar vorteilhaft, aber nicht unbedingt erforderlich. Eine zusätzliche lokale Druckbeaufschlagung kann in einer alternativen Variante vorhanden sein.

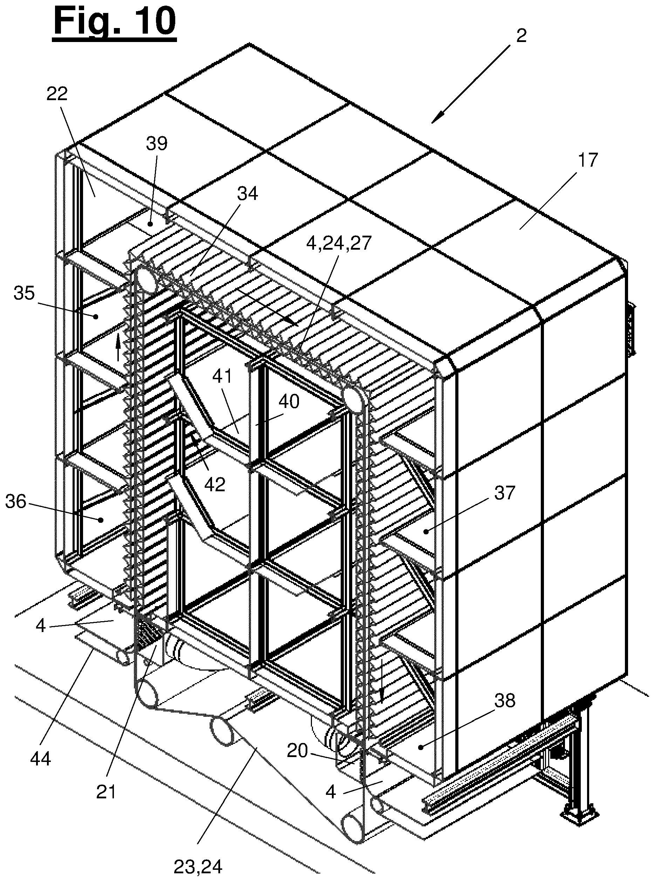

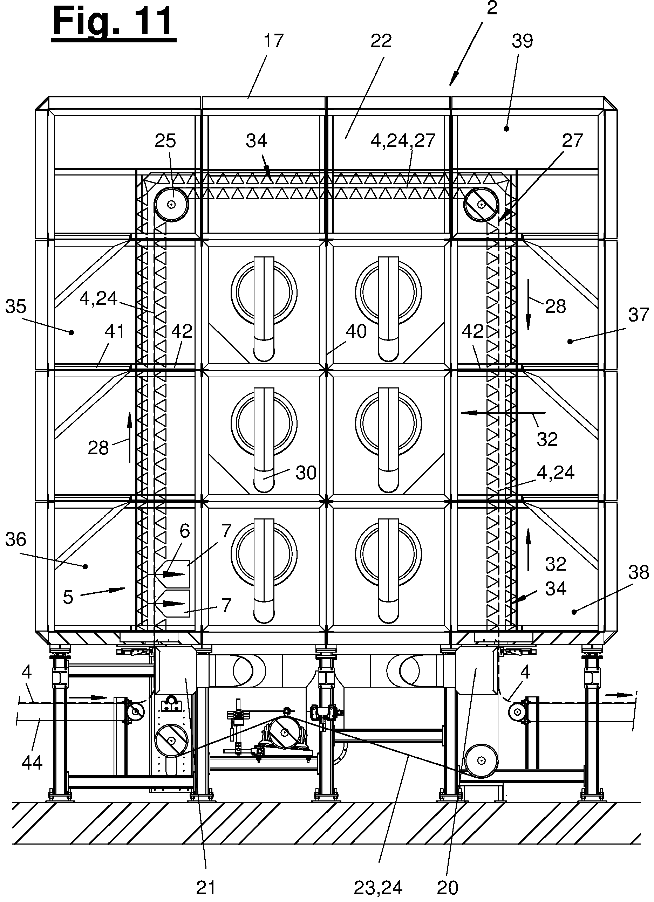

Die Belüftungseinrichtung (29) weist gemäß Figur 10 bis 12 in mehreren Kammerbereichen (35-39) an der Warenbahn (2) jeweils eine Düsenanordnung (34) für die Umwälzströmung (31) auf. Die Düsenanordnung (34) kann gemäß Figur 11 im Bereich der Absaugstelle(n) (53) fehlen bzw. unterbrochen sein. Die Düsenanordnung (34) kann auch bei der Variante der Trocknungskammer (22) von Figur 1 und 2 vorhanden sein.

Die Düsenanordnung (34) kann veränderbar ausgebildet sein. Sie besteht z.B. aus mehreren im Querschnitt im Wesentlichen dreieckigen, leistenartigen Düsenkörpern, die mit Abstand nebeneinander bzw. übereinander angeordnet sind und zwischen sich jeweils eine Düsenöffnung bilden. Die Düsenanordnung (34) weist z.B. in den Kammerbereichen (35-39) jeweils eine Reihe von mehreren äußeren Düsenkörpern in Strömungsrichtung vor der Warenbahn und eine Reihe von mehreren inneren Düsenkörpern in Strömungsrichtung hinter der Warenbahn (4) auf. Figur 11 verdeutlicht diese Anordnung. Durch die Dreiecksform der Düsenkörper sind die dazwischen ausgebildeten Düsenbereiche bzw. Strömungsbereiche konvergent und bündeln jeweils die ankommende Gasströmung zur schmalen, schlitzartigen Düsenöffnung hin.

Die Düsenkörper erstrecken sich quer zur Laufrichtung (28) der Warenbahn (4) und in Tiefenrichtung der Trocknungskammer (22). Die Düsenkörper sind jeweils an ihren Enden in einem Gestell oder Rahmen gehalten. Diese Anordnung kann beweglich oder verstellbar sein. Hierdurch kann die Weite der Düsenöffnungen in Laufrichtung sowie ggf. die Zahl der in einem Kammerbereich aufgereihten Düsenkörper variiert werden. Die Düsenanordnung (34) erstreckt sich zumindest bereichsweise, bevorzugt umlaufend, entlang der Bewegungsbahn (27) und durch Boden- bzw. Durchlassöffnungen (42) in den liegenden Schotts (41) der in der Kammermatrix befindlichen Kammerbereiche (35-38) sowie durch aufrechte Schotts des oberen Kammerbereichs (39).

Die Belüftungseinrichtung (29) erzeugt bei den Varianten von Figur 1, 2, 3 und 9 bis 12 jeweils auch eine Austauschströmung oder Gegenströmung (32) des Gases bzw. Trockengases, die entlang der Warenbahn (4) bzw. der Bewegungsbahn (27) und dabei entgegen der Laufrichtung (28) der Warenbahn (4) gerichtet ist. Die Gegenströmung (32) ist vom Auslauf (19) zum Einlauf (18) gerichtet. Am Auslauf (19) ist eine Gaszufuhr (20) für Frischgas, insbesondere Frischluft angeordnet. Am Einlauf (18) befindet sich eine Gasabfuhr (21) für das Abgas, insbesondere Abluft.

Das Frischgas wird mit Überdruck mittels eines Gebläses in die Trocknungskammer (22) an der Gaszufuhr (20) eingespeist und das Abgas mit Unterdruck aus der Trocknungskammer (22) an der Gasabfuhr (21) abgezogen. Durch die räumliche Trennung und Distanz sowie die Druckunterschiede der Gaszufuhr (20) und der Gasabfuhr (21) wird die Gegenströmung (32) in der Trocknungskammer (22) erzeugt.

Die Gegenströmung (32) weist einen über den Strömungsweg vom Auslauf (19) zum Einlauf (18) zunehmenden Feuchtegehalt auf. Am Einlauf (18) hat die eintretende Warenbahn (4) den maximalen Feuchtegehalt. Hier hat durch die Gegenströmung (32) das Gas ebenfalls einen hohen Feuchtegrad. In Laufrichtung (28) der Warenbahn (4) werden die Gasströmungen, insbesondere Umwälzströmungen (31) und die Gegenströmung (32) sowie die Warenbahn (4) zunehmend trockener. Am Auslauf (19) haben die Warenbahn (4) und die Gasströmungen (31,32) den niedrigsten Feuchtegehalt.

Bei dem Trocknungsprozess hat das Frischgas den geringsten und das Abgas den höchsten Feuchtegehalt. Die Gaszufuhr (20) und die Gasabfuhr (21) befinden sich bevorzugt an der Kammerunterseite. Sie können ansonsten an einer beliebig anderen Stelle der Trocknungskammer (22) angeordnet sein.

Der Trocknungseinrichtung (2) wird die laufende Warenbahn (4) von der vorgeschalteten Flüssigkeitsstrahlverfestigungseinrichtung (3) über ein Fördermittel (44), z.B. ein endlos umlaufendes Förderband, zugeführt und an das Fördermittel (23), insbesondere das Förderband (24), übergeben. Bei der in Figur 1 bis 12 gezeigten Ausführungsform erfolgt die Übergabe im externen Bereich (26) an den aufrechten Strang des Förderbands (24) und knapp unterhalb des Einlaufs (18). Die liegend zugeführte Warenbahn (4) wird dabei nach oben in eine aufrechte Lage umgelenkt.

Bei der Variante von Figur 13 kann die Warenbahn (4) vom Fördermittel (44) an ein anderes, innerhalb der Trocknungskammer (22) angeordnetes Fördermittel übergeben und von diesem weiter zu dem trommelförmigen Fördermittel (23) transportiert werden. Die Abgabe kann auch direkt an das trommelförmige Fördermittel (23) erfolgen. Die Abgabe der getrockneten Warenbahn (4) kann vom Fördermittel (23) in beiden Ausführungsvarianten an ein weiteres Förderband oder dgl. erfolgen.

Die Flüssigkeitsstrahlverfestigungseinrichtung (3) weist ein oder mehrere Injektoren (45) auf, die jeweils eine Vielzahl eng gebündelter Flüssigkeitsstrahlen (46) unter hohem Druck gegen die laufende Warenbahn (4) emittieren, die dabei von einem Fördermittel (47), z.B. einer rotierenden Fördertrommel, unterstützt wird. Das Fördermittel (47) ist fluiddurchlässig und ist mit einer Absaugung (48) verbunden, welche die eingebrachte Flüssigkeit und die bei der Vernadelung der Warenbahn (4) mitgerissene Umgebungsluft vom Fördermittel (47) absaugt und über eine Leitung (49) abführt.

Die von einem Florerzeuger (52) und ggf. einem zwischengeschalteten Vliesleger oder dgl. zugeführte Warenbahn (4) wird auf der Eingangsseite der Flüssigkeitsstrahlverfestigungseinrichtung (3) über ein Fördermittel (43), z.B. ein endlos umlaufendes Zuführband, zugeführt und von hier an die erste Fördertrommel (47) oder ein anderes Fördermittel übergeben. Ein bodenseitiger Injektor kann dabei die Übergabe unterstützen. Die laufende Warenbahn (4) wird dann von den Fördermitteln (47), insbesondere Fördertrommeln, weiter transportiert und an das Abführband (44) abgegeben. Die fluiddurchlässigen Fördermittel (47) können auch in anderer Weise ausgebildet sein, z.B. als Förderbänder.

Die von der Flüssigkeitsstrahlverfestigungseinrichtung (3) mittels Leitungen (49) abgeführte Flüssigkeit nebst mitgerissener Luft kann einer Aufbereitung zugeführt werden. Figur 1 bis 8 und Figur 13 zeigen hierfür verschiedene Varianten.

Bei der Ausführungsform von Figur 1 und 2 sind ein oder mehrere, insbesondere zwei, Absaugelemente (7) im ersten einlaufseitigen Kammerbereich (36') angeordnet. Alternativ oder zusätzlich können ein oder mehrere Absaugelemente (7) auch an anderer Stelle in der Trocknungskammer (22) angeordnet sein. Die ein oder mehreren Leitungen (12) sind aus der Trocknungskammer (22) herausgeführt und sind jeweils mit einem eigenen Abscheider (9) und einem zugeordneten Unterdruckerzeuger (8) verbunden. Die Leitungen (12) sind dabei auch mit den Leitungen (49) der Wasserstrahlverfestigungseinrichtung (3) verbunden.

Die Ausgänge der Abscheider (9) für die abgeschiedene Flüssigkeit sind mit einer Fluidabgabe (10) verbunden, wobei ggf. eine Pumpe zwischengeschaltet ist. Die Ausgänge der Abscheider (9) für den entfeuchteten Saugstrom (6) sind jeweils mit einem Unterdruckerzeuger (8) verbunden. Die von den Unterdruckerzeugern (8) ausgeblasene entfeuchtete Gasströmung wird einem Wärmetauscher (13) zugeführt, mit dem das Frischgas für die Trocknungskammer (22) vorgeheizt werden kann. Die dadurch abgekühlte entfeuchtete Gasströmung wird dann über die Gasabgabe (11) an die Umgebung abgeführt.

Die Belüftungseinrichtung (29) der Trocknungseinrichtung (2) kann eine in Figur 1 dargestellte Regenerationseinrichtung (50) aufweisen. Das an der Gasabfuhr (21) abgezogene heiße und besonders feuchte Abgas kann über einen Wärmetauscher (14) geführt und dann als kühle Abluft (15) abgegeben werden. Mit der im Wärmetauscher (14) abgegebenen Wärme kann das über die Gaszufuhr (20) zugeführte Frischgas beheizt werden. Dies kann zusätzlich zu der Erwärmung im Wärmetauscher (13,13') erfolgen.

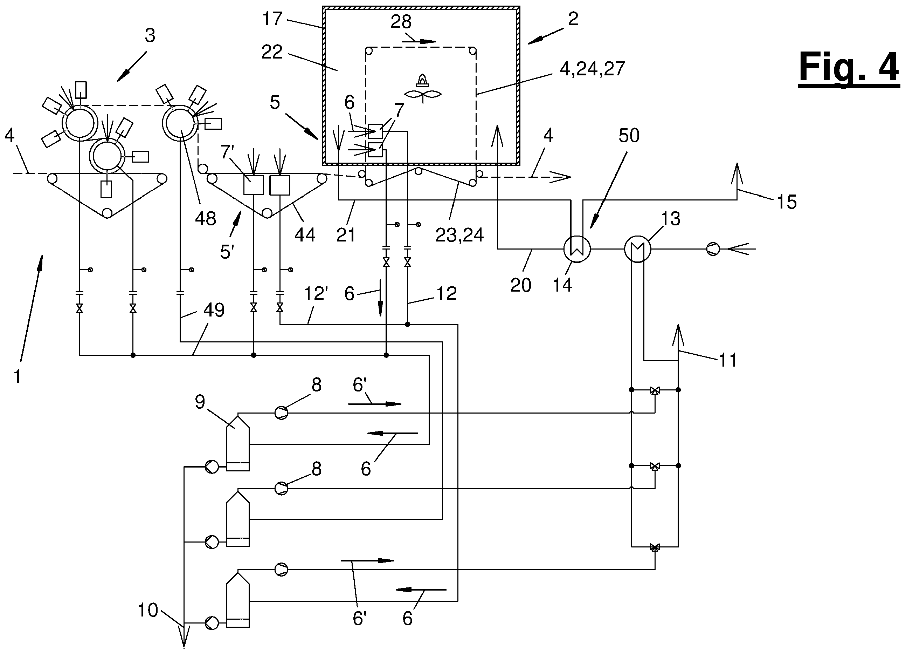

Die Variante von Figur 4 stimmt weitgehend mit der Ausführung von Figur 1 überein. Bei Figur 4 ist am Abführband (44) zusätzlich eine andere Absaugeinrichtung (5') angeordnet, die ein oder mehrere an einem fluiddurchlässigen Band des Fördermittels (44) angeordnete Absaugelemente (7') aufweist, welche über Leitungen (12') mit den z.B. drei Unterdruckerzeugern (8) und drei Abscheidern (9) der Absaugeinrichtung (5) verbunden sind. Die Absaugelemente (7') saugen Umgebungsluft durch die laufende Warenbahn (4) und das fluiddurchlässige Förderband.

Figur 4 verdeutlicht, dass die jeweils ein oder mehreren Unterdruckerzeuger (8) und Abscheider (9) gemeinsam von der Absaugeinrichtung (5), der Flüssigkeitsstrahlverfestigungseinrichtung (3) und ggf. der weiteren Absaugeinrichtung (5') genutzt werden können und an diese angeschlossen sind.

Die Absaugeinrichtung (5) kann als Erstausrüstung bei einer Trocknungseinrichtung (2) und ggf. einer Faserbehandlungsanlage (1) vorhanden sein. Die bevorzugt mehreren Unterdruckerzeuger (8) und Abscheider (9) können dabei von vornherein als gemeinsame Einheit mit Anschluss an die Flüssigkeitsstrahlverfestigungseinrichtung (3) und ggf. eine weitere Absaugeinrichtung (5') konzipiert sein.

Die Absaugeinrichtung (5) kann auch an einer bestehenden Trocknungseinrichtung (2) nachgerüstet werden. Die Leitungen (12) können dabei an eine ggf. schon vorhandene Aufbereitungseinrichtung der Flüssigkeitsstrahlverfestigungseinrichtung (3) oder einer anderen Anlagenkomponente und an deren Unterdruckerzeuger (8) und Abscheider (9) angeschlossen werden. Entsprechendes gilt für eine wahlweise zusätzlich angeordnete weitere Absaugeinrichtung (5').

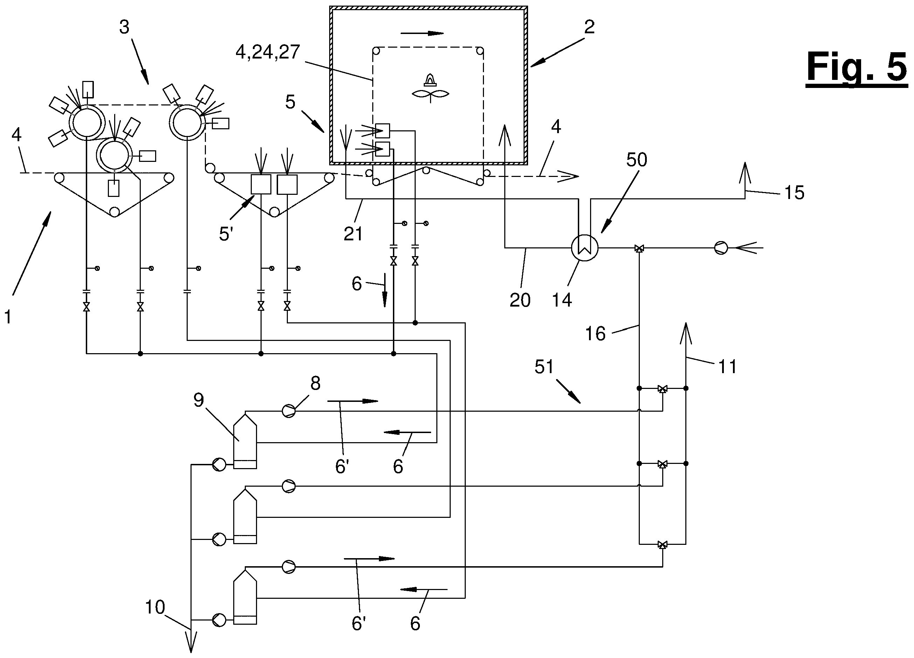

Die in Figur 5 gezeigte Variante unterscheidet sich von Figur 4 durch den Entfall des Wärmetauschers (13). Die von dem Unterdruckerzeugern (8) ausgeblasene und entfeuchtete Gasströmung kann wahlweise einer Gasabgabe (11) zugeführt werden oder in eine Zuführleitung der Gaszufuhr (20) eingespeist werden. Bei dieser Einspeisung wird eine Rückführung (16) der entfeuchteten Gasströmung in die Trocknungskammer (22) zusammen mit dem Frischgas gebildet.

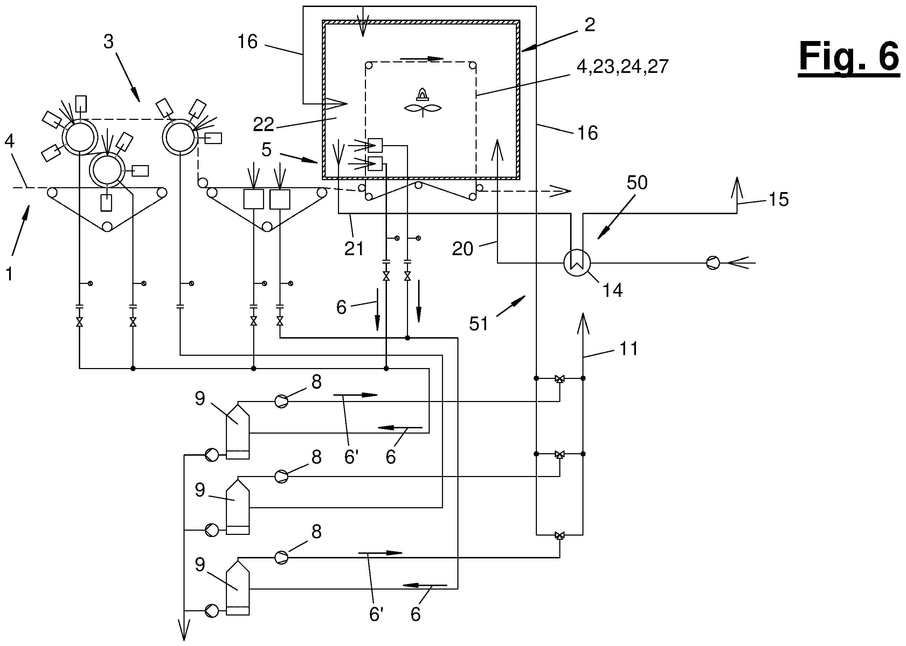

Die in Figur 6 dargestellte Variante unterscheidet sich von den Ausführungen von Figur 1 bis 5 durch eine andere Rückführung (16) des entfeuchteten und von dem Unterdruckerzeugern (8) abgegebenen Gasstroms (6'). Die Rückführung (16) ist direkt an die Trocknungskammer (22) angeschlossen. Das entfeuchtete und ggf. mit Abwärme der Unterdruckerzeuger (8) beheizte Gas (6') kann an ein oder mehreren Stellen gezielt in die Trocknungskammer (22) eingespeist werden. Bei einer Kammerunterteilung in mehrere ggf. gegenseitig abgeschottete Kammerbereiche kann eine Einspeisung in mehrere unterschiedliche Kammerbereiche erfolgen.

Mit den in der Trocknungskammer (22) angeordneten ein oder mehreren Absaugelementen (7) wird das Gas durch die Absaugeinrichtung (5) und die Rückführung (16) in einem Kreislauf (51) bewegt. Hierbei wird der heiße und feuchte Saugstrom (6) abgezogen, in den ein oder mehreren Abscheidern (9) entfeuchtet und dann wieder als abgegebener Gasstrom (6') über die Rückführung (16) in die Trocknungskammer (22) direkt oder mittelbar über das Frischgas eingespeist. Die Wärmeverluste sind in diesem Kreislauf (51) gering. Die in Figur 5 und 6 gezeigte Rückführung (16) und der Kreislauf (51) können auch bei den anderen vorbeschriebenen Ausführungsvarianten eingesetzt werden.

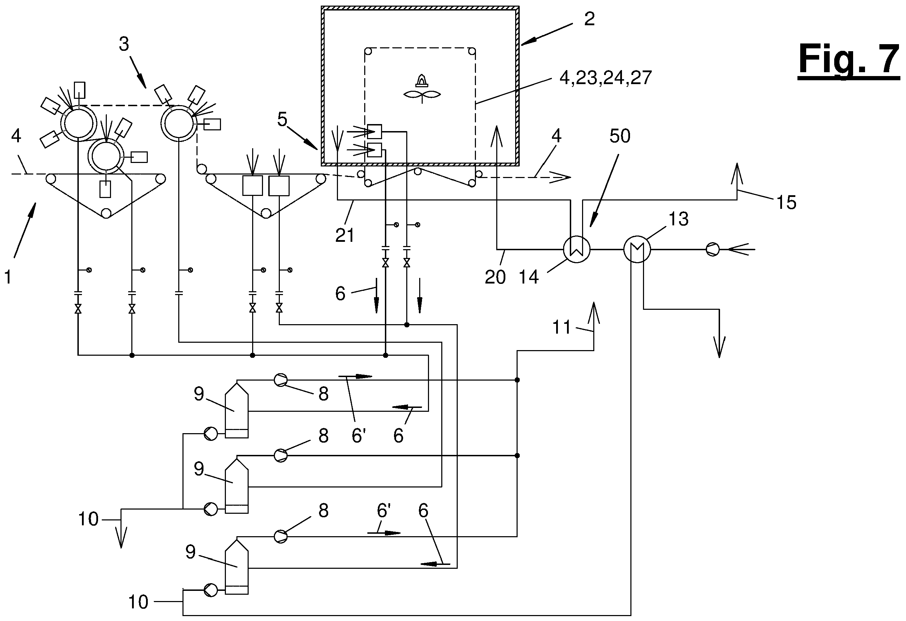

Bei der Ausführungsform von Figur 7 wird der von den Unterdruckerzeugern (8) abgegebene, z.B. ausgeblasene, und entfeuchtete Gasstrom (6') über die Gasabgabe (11) an die Umgebung abgeführt. Eine an mindestens einem Abscheider (9) angeschlossene Fluidabgabe (10) ist bei dieser Variante mit dem Wärmetauscher (13) verbunden. Die Restwärme in der aus dem Saugstrom (6) abgeschiedenen Flüssigkeit kann zur Beheizung des Frischgases für die Trocknungseinrichtung (2) benutzt werden. Die anderen Fluidausgänge der ein oder mehreren andere Abscheider (9) können über eine Fluidabgabe (10) mit der Abwasserversorgung oder mit einem Kreislauf zur Rückführung der Flüssigkeit zu einem anderen Verbraucher, insbesondere zu einer anderen Komponente der Faserbehandlungsanlage (1) verbunden sein. Dies kann z.B. die Flüssigkeitsstrahlverfestigungseinrichtung (3) sein.

Figur 8 zeigt eine Ausführungsform, bei der die ein oder mehreren Absaugelemente (7) der Absaugeinrichtung (5) außerhalb der Trocknungskammer (22) angeordnet sind. Sie befinden sich an dem besagten externen Bereich (26) des Fördermittels (23). Figur 8 zeigt auch eine besonders einfache Variante der Gasführung, bei der die ein oder mehreren Abscheider (9) und die Unterdruckerzeuger (8) mit der Gasabgabe (11) zur Ableitung des entfeuchteten Gases an die Umgebung verbunden sind.

Die in Figur 3 gezeigte Variante mit der Anordnung von ein oder mehreren Absaugelementen (7) im Einlauf (18) kann mit einer der gezeigten Schaltplanvarianten von Figur 1 und 4 bis 8 kombiniert werden.

Figur 13 zeigt die besagte andere Ausführung einer Trocknungseinrichtung (2) und einer Absaugeinrichtung (5) in Verbindung mit einer Leitungsführung und Anordnung von Unterdruckerzeugern (8) und Abscheidern (9) gemäß Figur 1.

Abwandlungen der gezeigten und beschriebenen Ausführungsformen sind in verschiedener Weise möglich. Insbesondere können die Merkmale der vorbeschriebenen Ausführungsbeispiele und der genannten Varianten in beliebiger Weise miteinander kombiniert und ggf. auch ausgetauscht werden. Insbesondere können die Leitungs- und Gasführungen in den Varianten von Figur 1 bis 8 und 13 miteinander kombiniert und vertauscht werden.

### BEZUGSZEICHENLISTE

- 1: Faserbehandlungsanlage
- 2: Trocknungseinrichtung
- 3: Flüssigkeitsstrahlverfestigungseinrichtung, spunlace
- 4: Warenbahn, Faserflor, Vlies
- 5: Absaugeinrichtung
- 5': zusätzliche Absaugeinrichtung
- 6: Saugstrom
- 6': abgegebener Gasstrom
- 7: Absaugelement, Saugdüsenbalken
- 7': Absaugelement
- 8: Unterdruckerzeuger, Saugquelle, Gaspumpe
- 9: Abscheider, Zyklon
- 10: Fluidabgabe, Wasserabgabe
- 11: Gasabgabe, Luftabgabe
- 12: Leitung
- 12': Leitung
- 13: Wärmetauscher
- 13': Wärmetauscher
- 14: Wärmetauscher
- 15: Abluft
- 16: Rückführung, Saugstrom
- 17: Gehäuse
- 18: Einlauf
- 19: Auslauf
- 20: Gaszufuhr, Frischluft
- 21: Gasabfuhr, Abluft
- 22: Trocknungskammer
- 23: Fördermittel für Warenbahn
- 24: Förderband
- 25: Umlenkung
- 26: externer Bereich des Fördermittels
- 27: Bewegungsbahn, Schleife
- 28: Laufrichtung Warenbahn
- 29: Belüftungseinrichtung
- 30: Heizeinrichtung
- 31: Umwälzströmung
- 32: Austauschströmung, Gegenströmung
- 33: Gebläse
- 34: Düsenanordnung
- 35: Kammerbereich seitlich, links, oben
- 36: Kammerbereich seitlich, links, unten
- 36': Kammerbereich aufrecht, links
- 37: Kammerbereich seitlich, rechts, oben
- 38: Kammerbereich seitlich, rechts, unten
- 38': Kammerbereich aufrecht, rechts
- 39: Kammerbereich zentral, liegend
- 40: Schott, Kammerwand zentral
- 41: Schott, Kammerboden
- 42: Bodenöffnung
- 43: Fördermittel, Zuführband
- 44: Fördermittel, Abführband
- 45: Injektor
- 46: Flüssigkeitsstrahl
- 47: Fördermittel, Fördertrommel
- 48: Absaugung
- 49: Leitung
- 50: Regenerationseinrichtung
- 51: Kreislauf
- 52: Florerzeuger, Karde
- 53: Absaugstelle, Beaufschlagungsstelle

## Patentansprüche

1. Trocknungseinrichtung für eine feuchte, insbesondere mit Flüssigkeitsstrahlen (45) verfestigte, Warenbahn (4) aus einem textilen Fasermaterial, insbesondere einem Nonwoven-Faservlies, wobei die Trocknungseinrichtung (2) eine Trocknungskammer (22) mit einer Belüftungseinrichtung (29) sowie einen Einlauf (18), einen Auslauf (19) und ein fluiddurchlässiges Fördermittel (23) für die laufende Warenbahn (4) aufweist, wobei die Warenbahn (4) innerhalb der Trocknungskammer (22) mit dem Fördermittel (23) transportiert und mit einem beheizten Gas, insbesondere Luft, getrocknet wird, wobei die Trocknungseinrichtung (2) zusätzlich eine Absaugeinrichtung (5) aufweist, welche in der Warenbahn (4) enthaltene Flüssigkeit, insbesondere Wasser, mit einem Saugstrom (6) an einer oder mehreren Absaugstelle(n) (53) an der Warenbahn (4) lokal absaugt und abführt, **dadurch**
**gekennzeichnet, dass** die Belüftungseinrichtung (29) eine Umwälzströmung (31) des beheizten Gases, insbesondere Luft, erzeugt, welche quer durch die Warenbahn (4) und das Fördermittel (23) gerichtet ist.

2. Trocknungseinrichtung nach Anspruch 1, **dadurch gekennzeichnet, dass** die Absaugeinrichtung (5) an einer Absaugstellen (53) ein am Fördermittel (23) angeordnetes Absaugelement (7), insbesondere einen hohlen Saugdüsenbalken, aufweist.

3. Trocknungseinrichtung nach Anspruch 1 oder 2,
**dadurch gekennzeichnet, dass** die Absaugeinrichtung (5) einen mit dem Absaugelement (7) verbundenen Unterdruckerzeuger (8) für die Generierung des Saugstroms (6) aufweist und/oder die Absaugeinrichtung (5) einen mit dem Absaugelement (7) verbundenen Abscheider (9), insbesondere einen Zyklon, zum Abscheiden der abgesaugten Flüssigkeit aus dem Saugstrom (6) aufweist.

4. Trocknungseinrichtung nach Anspruch 3
**dadurch gekennzeichnet, dass** die Absaugeinrichtung (5) einen Wärmetauscher (13') für den Saugstrom (6) aufweist und/oder die Absaugeinrichtung (5) einen Wärmetauscher (13) für den vom Unterdruckerzeuger (8) abgegebenen und entfeuchteten sowie bevorzugt mit der Abwärme des Unterdruckerzeugers (8) beheizten Gasstrom (6') aufweist.

5. Trocknungseinrichtung nach Anspruch 4,
**dadurch gekennzeichnet, dass** der Wärmetauscher (13,13') zum Vorwärmen eines Frischgases vorgesehen und ausgebildet ist, welches der Trocknungseinrichtung (2) und deren Belüftungseinrichtung (29) zugeführt wird.

6. Trocknungseinrichtung nach Ansprüche 3 bis 5,
**dadurch gekennzeichnet, dass** die Absaugeinrichtung (5) eine Rückführung (16) für den vom Unterdruckerzeuger (8) abgegebenen und entfeuchteten sowie bevorzugt mit der Abwärme des Unterdruckerzeugers (8) beheizten Gasstrom (6') in die Trocknungskammer (22) aufweist.

7. Trocknungseinrichtung nach einem der vorhergehenden Ansprüche, **dadurch gekennzeichnet, dass** eine oder mehrere Absaugstelle(n) (53), insbesondere deren Absaugelement(e) (7), im Bereich des Einlaufs (18) angeordnet sind.

8. Trocknungseinrichtung nach einem der vorhergehenden Ansprüche, **dadurch gekennzeichnet, dass** ein Absaugelement (7) außerhalb der Trocknungskammer (14) an einem externen Bereich (26) des Fördermittels (23) angeordnet ist und/oder ein Absaugelement (7) innerhalb der Trocknungskammer (22) angeordnet ist und/oder ein Absaugelement (7) teilweise innerhalb und teilweise außerhalb der Trocknungskammer (22), insbesondere im Einlauf (18), angeordnet ist.

9. Trocknungseinrichtung nach einem der vorhergehenden Ansprüche, **dadurch gekennzeichnet, dass** die Absaugeinrichtung (5) an der jeweiligen Absaugstelle (53) das beheizte Gas, insbesondere Luft, aus der Trocknungskammer (22) ansaugt, wobei der Saugstrom (6) und die Umwälzströmung (31) nebeneinander vorhanden und gleich gerichtet sind, wobei der Saugstrom (6) durch die Warenbahn (4) eine größere Strömungsgeschwindigkeit als die Umwälzströmung (31) hat.

10. Trocknungseinrichtung nach einem der vorhergehenden Ansprüche, **dadurch gekennzeichnet, dass** die Trocknungseinrichtung (2) eine Regenerationseinrichtung (50) für das Abgas aufweist, wobei bevorzugt die Regenerationseinrichtung (50) und die Absaugeinrichtung (5) gekoppelt sind, insbesondere über einen Wärmetauscher (13,13',14).

11. Trocknungseinrichtung nach einem der vorhergehenden Ansprüche, **dadurch gekennzeichnet, dass** der Trocknungseinrichtung (2) eine Flüssigkeitsstrahlverfestigungseinrichtung (3) vorgeschaltet ist.

12. Faserbehandlungsanlage mit einem Florerzeuger (52), insbesondere einer Karde, für eine als Faserflor ausgebildete laufende Warenbahn (4), ggf. einer Legeeinrichtung für den Faserflor, einer Flüssigkeitsstrahlverfestigungseinrichtung (3) und einer Trocknungseinrichtung (2), **dadurch gekennzeichnet, dass** die Trocknungseinrichtung (2) nach mindestens einem der Ansprüche 1 bis 11 ausgebildet ist.

13. Verfahren zum Trocknen einer feuchten, insbesondere mit Flüssigkeitsstrahlen (45) verfestigten, Warenbahn (4) aus einem textilen Fasermaterial, insbesondere einem Nonwoven-Faservlies, mittels einer Trocknungseinrichtung (2), die eine Trocknungskammer (22) mit einer Belüftungseinrichtung (29) sowie einen Einlauf (18), einen Auslauf (19) und ein fluiddurchlässiges Fördermittel (23) für die laufende Warenbahn (4) aufweist, wobei die Warenbahn (4) innerhalb der Trocknungskammer (22) mit dem Fördermittel (23) transportiert und mit einem beheizten Gas, insbesondere Luft, getrocknet wird, wobei mittels einer zusätzlichen Absaugeinrichtung (5) in der Warenbahn (4) enthaltene Flüssigkeit, insbesondere Wasser, mit einem Saugstrom (6) an einer oder mehreren Absaugstelle(n) (53) an der Warenbahn (4) lokal abgesaugt und abgeführt wird, **dadurch gekennzeichnet, dass** die Belüftungseinrichtung (29) eine Umwälzströmung (31) eines beheizten Gases, insbesondere Luft, erzeugt, welche quer durch die Warenbahn (4) und das Fördermittel (23) gerichtet ist.

14. Verfahren nach Anspruch 13, **dadurch gekennzeichnet, dass** die Flüssigkeit an einer Absaugstellen (53) durch ein am Fördermittel (23) angeordnetes Absaugelement (7), insbesondere einen hohlen Saugdüsenbalken, abgesaugt wird, wobei bevorzugt die Absaugeinrichtung (5) an der jeweiligen Absaugstelle (53) Gas aus der Umgebung von der Rückseite der Warenbahn (4) durch die Warenbahn (4) und durch das stützende Fördermittel (23) ansaugt.

15. Verfahren nach Anspruch 13 oder 14, **dadurch gekennzeichnet, dass** der mit der abgesaugten Flüssigkeit beladene Saugstrom (6) regeneriert wird, wobei bevorzugt die im Saugstrom (6) und in dem vom Unterdruckerzeuger (8) abgegebenen und entfeuchteten Gasstrom (6') enthaltene Wärme zur Beheizung von Frischgas für die Trocknungseinrichtung (2) benutzt und/oder mit dem abgegebenen Gasstrom (6') der Trocknungskammer (22) wieder zugeführt wird.

## Claims

1. Drying device for a moist material web (4), in particular consolidated by liquid jets (45), from a textile fibrous material, in particular a nonwoven fibrous fleece, wherein the drying device (2) has a drying chamber (22) having a ventilation device (29) and an inlet (18), an outlet (19) and a fluid-permeable conveying means (23) for the running material web (4), wherein the material web (4) is transported within the drying chamber (22) by the conveying means (23) and dried with a heated gas, in particular air, wherein the drying device (2) additionally has a suction device (5) which locally suctions and discharges liquid, in particular water, contained in the material web (4) by way of a suction flow (6) at one or a plurality of suction location(s) (53) on the material web (4), **characterized in that** the ventilation device (29) generates a recirculating flow (31) of the heated gas, in particular air, which is directed transversely through the material web (4) and the conveying means (23) .

2. Drying device according to Claim 1, **characterized in that** the suction device (5) at one suction location (53) has a suction element (7), in particular a hollow suction nozzle beam, disposed on the conveying means (23) .

3. Drying device according to Claim 1 or 2, **characterized in that** the suction device (5) has a vacuum generator (8), which is connected to the suction element (7), for generating the suction flow (6), and/or the suction device (5) has a separator (9), in particular a cyclone, which is connected to the suction element (7), for separating the suctioned liquid from the suction flow (6).

4. Drying device according to Claim 3, **characterized in that** the suction device (5) has a heat exchanger (13') for the suction flow (6), and/or the suction device (5) has a heat exchanger (13) for the gas flow (6') which is delivered and dehydrated by the vacuum generator (8) and preferably heated by the waste heat of the vacuum generator (8).

5. Drying device according to Claim 4, **characterized in that** the heat exchanger (13, 13') is provided and specified to pre-heat a fresh gas which is supplied to the drying device (2) and the ventilation device (29) of the latter.

6. Drying device according to Claims 3 to 5, **characterized in that** the suction device (5) has a return line (16) into the drying chamber (22) for the gas flow (6') which is delivered and dehydrated by the vacuum generator (8) and preferably heated by the waste heat of the vacuum generator (8).

7. Drying device according to one of the preceding claims, **characterized in that** one or a plurality of suction location(s) (53), in particular the suction element(s) (7) thereof, is/are disposed in the region of the inlet (18).

8. Drying device according to one of the preceding claims, **characterized in that** one suction element (7) is disposed outside the drying chamber (14) on an external region (26) of the conveying means (23), and/or one suction element (7) is disposed within the drying chamber (22), and/or one suction element (7) is disposed partially within and partially outside the drying chamber (22), in particular in the inlet (18).

9. Drying device according to one of the preceding claims, **characterized in that** the suction device (5) at the respective suction location (53) suctions the heated gas, in particular air, from the drying chamber (22), wherein the suction flow (6) and the recirculating flow (31) are present side-by-side and identically directed, wherein the suction flow (6) as a result of the material web (4) has a higher flow rate than the recirculating flow (31).

10. Drying device according to one of the preceding claims, **characterized in that** the drying device (2) has a regeneration device (50) for the exhaust gas, wherein the regeneration device (50) and the suction device (5) are preferably coupled, in particular by way of a heat exchanger (13, 13', 14).

11. Drying device according to one of the preceding claims, **characterized in that** a liquid jet consolidation device (3) is disposed upstream of the drying device (2).

12. Fibre treatment system having a pile generator (52), in particular a card, for a running material web (4) formed as a fibrous pile, optionally a laying device for the fibrous pile, a liquid jet consolidation device (3) and a drying device (2), **characterized in that** the drying device (2) is configured according to at least one of Claims 1 to 11.

13. Method for drying a moist material web (4), in particular consolidated by liquid jets (45), from a textile fibrous material, in particular a nonwoven fibrous fleece, by means of a drying device (2) which has a drying chamber (22) having a ventilation device (29) and an inlet (18), an outlet (19) and a fluid-permeable conveying means (23) for the running material web (4), wherein the material web (4) is transported within the drying chamber (22) by the conveying means (23) and dried with a heated gas, in particular air, wherein, by means of an additional suction device (5), liquid, in particular water, contained in the material web (4) is locally suctioned and discharged by way of a suction flow (6) at one or a plurality of suction location(s) (53) on the material web (4), **characterized in that** the ventilation device (29) generates a recirculating flow (31) of a heated gas, in particular air, which is directed transversely through the material web (4) and the conveying means (23).

14. Method according to Claim 13, **characterized in that** the liquid at one suction location (53) is suctioned by a suction element (7), in particular a hollow suction nozzle beam, disposed on the conveying means (23), wherein the suction device (5) at the respective suction location (53) preferably suctions gas from the environment from the rear side of the material web (4) through the material web (4) and through the supporting conveying means (23).

15. Method according to Claim 13 or 14, **characterized in that** the suction flow (6) charged with the suctioned liquid is regenerated, wherein preferably the heat contained in the suction flow (6) and in the gas flow (6') delivered and dehydrated by the vacuum generator (8) is utilized for heating fresh gas for the drying device (2) and/or, conjointly with the delivered gas flow (6'), is re-supplied to the drying chamber (22).

## Revendications

1. Dispositif de séchage d'une nappe de tissu humide (4), notamment consolidée par des jets de liquide (45), et formée à partir d'une matière fibreuse textile, notamment d'un voile de fibres non tissé, le dispositif de séchage (2) comportant une chambre de séchage (22) pourvue d'un dispositif de ventilation (29) ainsi qu'une entrée (18), une sortie (19) et un moyen de transport (23) perméable aux fluides et destiné à la nappe de tissu (4) en circulation, la nappe de tissu (4) étant transportée à l'intérieur de la chambre de séchage (22) à l'aide du moyen de transport (23) et séchée à l'aide d'un gaz, en particulier de l'air, chauffé, le dispositif de séchage (2) comportant en outre un dispositif d'aspiration (5) qui aspire et évacue localement le liquide, en particulier l'eau, contenu dans la nappe de tissu (4) avec un flux d'aspiration (6) en un ou plusieurs points d'aspiration (53) de la nappe de tissu (4), **caractérisé en ce que** le dispositif de ventilation (29) génère un écoulement de circulation (31) du gaz, en particulier de l'air, chauffé qui est dirigé transversalement à travers la nappe de tissu (4) et le moyen de transport (23).

2. Dispositif de séchage selon la revendication 1, **caractérisé en ce que** le dispositif d'aspiration (5) comporte, en un point d'aspiration (53), un élément d'aspiration (7), notamment une barre de buses d'aspiration creuse, disposé sur le moyen de transport (23) .

3. Dispositif de séchage selon la revendication 1 ou 2, **caractérisé en ce que** le dispositif d'aspiration (5) comporte un générateur de dépression (8) relié à l'élément d'aspiration (7) et destiné à générer le flux d'aspiration (6) et/ou le dispositif d'aspiration (5) comporte un séparateur (9), en particulier un cyclone, relié à un élément d'aspiration (7) et destiné à séparer le liquide aspiré du flux d'aspiration (6).

4. Dispositif de séchage selon la revendication 3, **caractérisé en ce que** le dispositif d'aspiration (5) comporte un échangeur de chaleur (13') destiné au flux d'aspiration (6) et/ou le dispositif d'aspiration (5) comporte un échangeur de chaleur (13) destiné au flux de gaz (6') dégagé par le générateur de dépression (8) et déshumidifié et de préférence chauffé avec la chaleur dissipée du générateur de dépression (8).

5. Dispositif de séchage selon la revendication 4, **caractérisé en ce que** l'échangeur de chaleur (13, 13') est prévu et conçu pour préchauffer un gaz frais qui est amené au dispositif de séchage (2) et au dispositif de ventilation (29) de celui-ci.

6. Dispositif de séchage selon les revendications 3 à 5, **caractérisé en ce que** le dispositif d'aspiration (5) comporte un retour (16) destiné à ramener le flux de gaz (6'), dégagé et déshumidifié par le générateur de dépression (8) et de préférence chauffé avec la chaleur dissipée du générateur de dépression (8), jusque dans la chambre de séchage (22).

7. Dispositif de séchage selon l'une des revendications précédentes, **caractérisé en ce qu'**un ou plusieurs points d'aspiration (53), notamment un ou plusieurs éléments d'aspiration (7) de celui-ci ou de ceux-ci, sont disposés dans la zone de l'entrée (18).

8. Dispositif de séchage selon l'une des revendications précédentes, **caractérisé en ce qu'**un élément d'aspiration (7) est disposé à l'extérieur de la chambre de séchage (14) au niveau d'une zone extérieure (26) du moyen de transport (23) et/ou un élément d'aspiration (7) est disposé à l'intérieur de la chambre de séchage (22) et/ou un élément d'aspiration (7) est disposé en partie à l'intérieur et en partie à l'extérieur de la chambre de séchage (22), en particulier dans l'entrée (18).

9. Dispositif de séchage selon l'une des revendications précédentes, **caractérisé en ce que** le dispositif d'aspiration (5) aspire le gaz, notamment l'air, chauffé de la chambre de séchage (22) au point d'aspiration respectif (53), le flux d'aspiration (6) et l'écoulement de circulation (31) étant présents l'un à côté de l'autre et étant dirigés dans la même direction, l'écoulement d'aspiration (6) à travers la nappe de tissu (4) ayant une vitesse d'écoulement supérieure à celle de l'écoulement de circulation (31).

10. Dispositif de séchage selon l'une des revendications précédentes, **caractérisé en ce que** le dispositif de séchage (2) comporte un dispositif de régénération (50) destiné à des gaz d'échappement, le dispositif de régénération (50) et le dispositif d'aspiration (5) étant de préférence couplés, notamment par le biais d'un échangeur de chaleur (13, 13', 14).

11. Dispositif de séchage selon l'une des revendications précédentes, **caractérisé en ce qu'**un dispositif de consolidation par jets de liquide (3) est monté en amont du dispositif de séchage (2).

12. Installation de traitement de fibres comprenant un générateur de voile de carde (52), en particulier une carde, destiné à une nappe de tissu (4) en circulation conçue comme un voile de carde, éventuellement un dispositif de pose destiné au voile de carde, un dispositif de consolidation par jets de liquide (3) et un dispositif de séchage (2), **caractérisé en ce que** le dispositif de séchage (2) est conçu selon l'une au moins des revendications 1 à 11.

13. Procédé de séchage d'une nappe de tissu humide (4), en particulier consolidée par des jets de liquide (45) et formée d'une matière fibreuse textile, en particulier d'un voile de fibres non tissé, au moyen d'un dispositif de séchage (2) qui comporte un chambre de séchage (22) pourvue d'un dispositif de ventilation (29) ainsi qu'une entrée (18), une sortie (19) et un moyen de transport (23) perméable aux fluides et destiné à la nappe de tissu (4) en circulation, la nappe de tissu (4) étant transportée à l'intérieur de la chambre de séchage (22) à l'aide du moyen de transport (23) et séchée à l'aide d'un gaz, en particulier de l'air, chauffé, le liquide, en particulier l'eau, contenu dans la nappe de tissu (4) étant aspiré et évacué localement à l'aide d'un flux d'aspiration (6) en un ou plusieurs points d'aspiration (53) sur la nappe de tissu (4) au moyen d'un dispositif d'aspiration supplémentaire (5), **caractérisé en ce que** le dispositif de ventilation (29) génère un écoulement de circulation (31) d'un gaz, en particulier de l'air, chauffé qui est dirigé transversalement à travers la nappe de tissu (4) et le moyen de transport (23).

14. Procédé selon la revendication 13, **caractérisé en ce que** le liquide est aspiré en un point d'aspiration (53) par un élément d'aspiration (7), notamment une barre de buses d'aspiration creuse, disposé sur le moyen de transport (23), de préférence le dispositif d'aspiration (5) aspirant au point d'aspiration respectif (53) le gaz de l'environnement depuis le côté arrière de la nappe de tissu (4) à travers la nappe de tissu (4) et à travers le moyen de transport (23) supportant celle-ci.

15. Procédé selon la revendication 13 ou 14, **caractérisé en ce que** le flux d'aspiration (6) chargé du liquide aspiré est régénéré, de préférence la chaleur contenue dans le flux d'aspiration (6) et dans le flux de gaz (6') déshumidifié et dégagé par le générateur de dépression (8) est utilisée pour chauffer du gaz frais destiné au dispositif de séchage (2) et/ou ramené à la chambre de séchage (22) avec le flux de gaz dégagé (6').
